# EUROPEAN PATENT APPLICATION

(11) **EP 2 680 349 A1**
(43) Date of publication of application: **01.01.2014**
(21) Application number: 12749342.7
(22) Date of filing: 21.02.2012
(51) Int. Cl.: H01M 4/62, H01M 4/134, H01M 4/1395, H01M 10/052, H01M 10/0566

(54) **SECONDARY CELL NEGATIVE ELECTRODE, SECONDARY CELL, SLURRY COMPOSITION FOR NEGATIVE ELECTRODE, AND METHOD OF PRODUCING SECONDARY CELL NEGATIVE ELECTRODE**

(30) Priority: 23.02.2011 JP 2011037644
(71) Applicant: Zeon Corporation, Tokyo 100-8246 (JP)
(72) Inventor: SASAKI, Tomokazu, Tokyo 100-8246 (JP)
(74) Representative: Vossius & Partner
(86) International application number: PCT/JP2012/054109
(87) International publication number: WO 2012/115096

(57) **Abstract**

In a negative electrode for a secondary battery including a negative electrode active material, a binder, and a water-soluble polymer, a copolymer containing 15 wt% to 50 wt% of an ethylenically unsaturated carboxylic acid monomer unit, 30 wt% to 70 wt% of a (meth)acrylic acid ester monomer unit, and 0.5 wt% to 10 wt% of a fluorine-containing (meth)acrylic acid ester monomer unit is used as the water-soluble polymer.

## Description

### Field

The present invention relates to a secondary battery negative electrode provided in a secondary battery such as a lithium ion secondary battery, a slurry composition for a negative electrode for producing the secondary battery negative electrode, a method for producing the secondary battery negative electrode, and a secondary battery having the secondary battery negative electrode.

### Background

In recent years, handheld terminal devices such as laptop computers, cellular phones, and PDA (Personal Digital Assistant) are being remarkably widespread. As a secondary battery used as a power source for these handheld terminal devices, e.g., a nickel-metal hydride secondary battery and a lithium ion secondary battery are often used. The handheld terminal devices are required to have a comfortable portability, and therefore such devices are rapidly becoming more compact, thin and lightweight with better performance. As a result, the handheld terminal devices are now being used in a wide variety of situations. Like the handheld terminal devices, the secondary battery is also required to be more compact, thin and lightweight with better performance.

For improving the performance of the secondary battery, there have been studied modification of the electrode, the electrolytic solution, and other members of the battery. Among them, the electrode is usually produced by mixing an electrode active material and, if necessary, an electroconducting agent such as electroconductive carbon, with a liquid composition in which a polymer serving as a binder (binding agent) is dispersed or dissolved in a solvent such as water or an organic liquid to prepare a slurry, then applying the slurry onto a current collector, and drying the slurry. As to electrodes, in addition to the studies on the electrode active material and the current collector themselves, there have also been made studies on the binder for effecting binding of, e.g., the electrode active material to the current collector, and a variety of additives (see, e.g., Patent Literatures 1 to 4).

For example, Patent Literatures 1 and 2 disclose slurries for negative electrodes of non-aqueous secondary batteries. The slurry in these Literatures contains a binder composed of a carbonaceous active material, a water-dispersed emulsion resin, and a water-soluble polymer. As the water-soluble polymer, polyvinyl alcohol, carboxymethyl cellulose, sodium polyacrylate, etc. are described. These Patent Literatures state that thereby coating layer strength and coating layer density of the batteries are improved.

Patent Literature 3 discloses a binder for an electrode of a secondary battery. The binder in this Literature consists of a copolymer latex obtained by emulsion polymerization of monomers composed of 0.02 to 13 wt% of a fluorine-containing unsaturated monomer, 10 to 38 wt% of an aliphatic conjugated diene monomer, 0.1 to 10 wt% of an ethylenically unsaturated carboxylic acid monomer, and 49 to 88.88 wt% of a monomer copolymerizable with the aforementioned monomers. This Patent Literature states that thereby high mixing stability, high blocking resistance, high anti-powder falling property, and high binding strength are obtained.

Patent Literature 4 discloses a binder for an electrode of a secondary battery. The binder in this Literature is composed of a polymer including a monomer unit derived from a fluorine atom-containing monomer such as a fluorinated alkyl (meth)acrylate. The Literature also discloses that a cellulose-based polymer, a polyacrylate, etc. may be added in order to improve application capability and charging-discharging property. This Patent Literature states that thereby an electrode which can persistently exert high bonding property with an active material can be obtained.

### Citation List

### Patent Literature

Patent Literature 1: Japanese Patent Application Laid-Open No. 2003-308841 A
Patent Literature 2: Japanese Patent Application Laid-Open No. 2003-217573 A
Patent Literature 3: Japanese Patent Application Laid-Open No. 2010-146870 A
Patent Literature 4: Japanese Patent Application Laid-Open No. 2002-42819 A

### Summary

### Technical Problem

In a secondary battery, particles of an electrode active material contained in a negative electrode may expand or contract during charging and discharging. When such expansion and contraction are repeated, the negative electrode may gradually swell, and this may cause deformation of the secondary battery. Therefore, there is a demand for the development of a technique that can suppress such swelling of the negative electrode.

In addition, some conventional secondary batteries cause capacity decreases after storage in a high temperature environment of, e.g., 60°C. Therefore, there is also a demand for the development of a technique that can suppress the reduction in capacity of the secondary battery even after the secondary battery is stored in a high temperature environment.

The present invention has been created in view of the foregoing problems. It is an object of the present invention to provide a negative electrode for a secondary battery that can embody a secondary battery in which swelling of the negative electrode upon charging and discharging can be suppressed and the capacity of the battery is less likely to decrease even after the battery is stored in a high-temperature environment. It is also an object to provide a slurry composition for a negative electrode that can be used for producing the negative electrode for a secondary battery, to provide a method for producing the negative electrode for a secondary battery, and to provide a secondary battery including the negative electrode for a secondary battery.

### Solution to Problem

In order to solve the foregoing problems, the present inventor has conducted extensive studies and found out that, when an electrode active material layer of a negative electrode for a secondary battery includes a water-soluble polymer containing an ethylenically unsaturated carboxylic acid monomer unit, a (meth)acrylic acid ester monomer unit, and a fluorine-containing (meth)acrylic acid ester monomer unit in a specific ratio, the swelling of the negative electrode upon charging and discharging can be suppressed and the capacity becomes less likely to decrease even after storage in a high-temperature environment. Thus the present invention has been completed.
That is, according to the present invention, the following (1) to (10) is provided.

(1) A negative electrode for a secondary battery, comprising a negative electrode active material, a binder, and a water-soluble polymer, wherein
   the water-soluble polymer is a copolymer containing 15 wt% to 50 wt% of an ethylenically unsaturated carboxylic acid monomer unit, 30 wt% to 70 wt% of a (meth)acrylic acid ester monomer unit, and 0.5 wt% to 10 wt% of a fluorine-containing (meth)acrylic acid ester monomer unit.
(2) The negative electrode for a secondary battery according to (1), wherein the negative electrode active material contains a metal, and the negative electrode active material is capable of storing and releasing lithium.
(3) The negative electrode for a secondary battery according to (1) or (2), wherein the negative electrode active material is a compound containing Si.
(4) The negative electrode for a secondary battery according to any one of (1) to (3), wherein the binder is a polymer containing an aliphatic conjugated diene monomer unit.
(5) The negative electrode for a secondary battery according to any one of (1) to (4), wherein the binder is a polymer containing an aliphatic conjugated diene monomer unit and an aromatic vinyl monomer unit.
(6) The negative electrode for a secondary battery according to any one of (1) to (5), wherein the ethylenically unsaturated carboxylic acid monomer in the water-soluble polymer is an ethylenically unsaturated monocarboxylic acid monomer.
(7) The negative electrode for a secondary battery according to any one of (1) to (6), wherein a viscosity of a 1wt% aqueous solution of the water-soluble polymer is 0.1 mPa·s to 20,000 mPa·s.
(8) A secondary battery comprising a positive electrode, a negative electrode, an electrolytic solution, and a separator, wherein
   the negative electrode is the negative electrode for a secondary battery according to any one of (1) to (7).
(9) A slurry composition for a negative electrode, comprising a negative electrode active material, a binder, a water-soluble polymer, and water, wherein
   the water-soluble polymer is a copolymer containing 15 wt% to 50 wt% of an ethylenically unsaturated carboxylic acid monomer unit, 30 wt% to 70 wt% of a (meth)acrylic acid ester monomer unit, and 0.5 wt% to 10 wt% of a fluorine-containing (meth)acrylic acid ester monomer unit.
(10) A method for producing a negative electrode for a secondary battery, the method comprising: applying the slurry composition for a negative electrode according to (9) onto a surface of a current collector; and drying the slurry composition.

### Advantageous Effects of Invention

The negative electrode for a secondary battery of the present invention can realize a secondary battery in which swelling of the negative electrode upon charging and discharging can be suppressed and a reduction in capacity is less likely to occur even after storage in a high-temperature environment.
In the secondary battery of the present invention, swelling of the negative electrode upon charging and discharging is suppressed, and reduction in capacity is less likely to occur even after storage in a high-temperature environment.
With the slurry composition for a negative electrode of the present invention, the negative electrode for a secondary battery of the present invention can be produced.
With the method for producing the negative electrode for a secondary battery of the present invention, the negative electrode for a secondary battery of the present invention can be produced.

### Description of Embodiments

The present invention will be described hereinbelow in detail by way of embodiments and exemplifications. However, the present invention is not limited to the following embodiments and exemplifications and may be implemented with any modifications without departing from the scope of claims and equivalents thereto. In the present description, "(meth)acryl-" means "acryl-" or "methacryl-". A "positive electrode active material" means an electrode active material for a positive electrode, and a "negative electrode active material" means an electrode active material for a negative electrode. A "positive electrode active material layer" means an electrode active material layer provided in a positive electrode, and a "negative electrode active material layer" means an electrode active material layer provided in a negative electrode.

### [1. Negative electrode for secondary battery]

The negative electrode for a secondary battery of the present invention (appropriately referred to hereinbelow as the "negative electrode of the present invention") contains a negative electrode active material, a binder, and a water-soluble polymer. Usually, the negative electrode of the present invention includes a current collector and a negative electrode active material layer formed on the surface of the current collector, and the negative electrode active material layer contains the aforementioned negative electrode active material, binder, and water-soluble polymer.

### [1-1. Negative electrode active material]

The negative electrode active material is an electrode active material for a negative electrode and is a substance that donates or accepts an electron in a negative electrode of a secondary battery.
For example, when the secondary battery of the present invention is a lithium ion secondary battery, a material that can store and release lithium is usually used as the negative electrode active material. Examples of the material that can store and release lithium may include a metal active material, a carbon active material, and an active material obtained by combining these materials.

The metal active material is an active material including a metal and is usually an active material containing in its structure an element capable of being intercalated (or doped) with lithium and having a theoretical electric capacitance per unit weight of 500 mAh/g or larger when the active material is intercalated with lithium. The upper limit of the theoretical electronic capacitance is not particularly limited, and may be, e.g., 5,000 mAh/g or lower. Examples of the metal active material for use may include: lithium metal, elemental metal capable of forming a lithium alloy, an alloy thereof, and an oxide, a sulfide, a nitride, a silicide, a carbide, and a phosphide thereof.

Examples of the elemental metal capable of forming a lithium alloy may include elemental metals such as Ag, Al, Ba, Bi, Cu, Ga, Ge, In, Ni, P, Pb, Sb, Si, Sn, Sr, Zn, and Ti. Examples of the alloy of elemental metal capable of forming a lithium alloy may include compounds containing the aforementioned elemental metals. Among them, silicon (Si), tin (Sn), lead (Pb), and titanium (Ti) are preferable, and silicon, tin, and titanium are more preferable. Therefore, elemental metal of silicon (Si), tin (Sn), or titanium (Ti), an alloy containing any of these elemental metals, or a compound of any of these metals is preferable.

The metal active material may further contain one or more non-metallic elements. Examples thereof may include SiC, SiOₓC_{y} (0 < x ≤ 3, 0 < y ≤ 5), Si₃N₄, Si₂N₂O, SiOₓ (0 < x ≤ 2), SnOₓ (0 < x ≤ 2), LiSiO, and LiSnO. Among them, SiOₓC_{y} that can be intercalated and deintercalated (i.e., dedoped) with lithium at a low electric potential is preferable. SiOₓC_{y} may be obtained by, e.g., calcining a polymer material containing silicon. Particularly, SiOₓC_{y} in a range of 0.8 ≤ x ≤ 3 and 0.8 ≤ y ≤ 4 is preferably used in view of the balance between the capacity and cycle property.

Examples of the oxide, the sulfide, the nitride, the silicide, the carbide and the phosphide of lithium metal, elemental metal capable of forming a lithium alloy and an alloy thereof may include an oxide, a sulfide, a nitride, a silicide, a carbide, and a phosphide of the element capable of intercalating lithium. Among them, an oxide is particularly preferable. For example, a lithium-containing metal complex oxide containing an oxide such as tin oxide, manganese oxide, titanium oxide, niobium oxide, and vanadium oxide, and a metal element selected from the group consisting of Si, Sn, Pb, and Ti atoms is used.

Further examples of the lithium-containing metal complex oxides may include a lithium-titanium complex oxide represented by LiₓTi_{y}M_{z}O₄ (wherein 0.8 ≤ x ≤ 1.5, 0.8 ≤ y ≤ 2.3 , 0.8 ≤ z ≤ 1.6, and M is an element selected from the group consisting of Na, K, Co, Al, Fe, Ti, Mg, Cr, Ga, Cu, Zn, and Nb), and a lithium-manganese complex oxide represented by LiₓMn_{y}M_{z}O₄ (x, y, z, and M are the same as the definitions in the lithium-titanium complex oxide). Among them, Li_{4/3}Ti_{5/3}O₄, Li₁Ti₂O₄, Li_{4/5}Ti_{11/5}O₄, and Li_{4/3}Mn_{5/3}O₄ are preferable.

Among these metal active materials, an active material containing silicon is preferable. Use of the active material containing silicon can increase electric capacity of the secondary battery. In general, the active material containing silicon greatly expands and contracts during charging and discharging (by a factor of, e.g., about 5). However, in the negative electrode of the present invention, reduction in battery performance due to expansion and contraction of the active material containing silicon can be prevented by the water-soluble polymer according to the present invention.

Among the active materials containing silicon, SiOₓ, SiC, and SiOₓC_{y} are preferable, and SiOₓC_{y} is more preferable. In such active materials including a combination of Si and C, intercalation and deintercalation of Li in and from Si (silicon) may occur at a high electric potential, and intercalation and deintercalation of C (carbon) in and from Li may occur at a low electric potential. Therefore, expansion and contraction are suppressed as compared to those in other metal active materials, so that the charging-discharging cycle property of the secondary battery can be improved.

The carbon active material is an active material having carbon main skeleton that is capable of being intercalated with lithium, and examples thereof may include carbonaceous materials and graphite materials.
The carbonaceous material is generally a carbon material having a low degree of graphitization (low crystallinity) and obtained by subjecting a carbon precursor to heat treatment at 2,000°C or lower for carbonization. The lower limit of the heat treatment is not particularly limited and may be, e.g., 500°C or higher.

Examples of the carbonaceous material may include graphitizable carbon whose carbon structure easily varies depending on the heat treatment temperature, and non-graphitizable carbon having a structure close to an amorphous structure that is typified by glass carbon.

Examples of the graphitizable carbon may include a carbon material that is produced with a raw material that is tar pitch obtained from petroleum or coal. Specific examples thereof may include cokes, meso-carbon microbeads (MCMB), mesophase pitch carbon fibers, and pyrolytic vapor-grown carbon fibers. MCMBs are carbon fine particles obtained by separating and extracting mesophase spherules that have been formed in the course of heating pitch materials at about 400°C. The mesophase pitch carbon fibers are carbon fibers produced with a raw material mesophase pitch that has been obtained by growth and coalescence of the mesophase spherules. The pyrolytic vapor-grown carbon fibers are carbon fibers obtained by (1) a method of thermally decomposing acrylic polymer fibers, (2) a method of spinning and then thermally decomposing pitches, or (3) a catalytic vapor-phase growth (catalytic CVD) method in which hydrocarbon is thermally decomposed in a vapor phase using nanoparticles of, e.g., iron as a catalyst.

Examples of the non-graphitizable carbon may include a calcined product of phenolic resin, polyacrylonitrile carbon fibers, quasi-isotropic carbon, a calcined product of furfuryl alcohol resin (PFA), and hard carbon.

The graphite material is a graphite material that is obtained by heat-treating graphitizable carbon at 2,000°C or higher and has a high crystallinity that is close to the crystallinity of graphite. The upper limit of the heat treatment temperature is not particularly limited, and may be, e.g., 5,000°C or lower.

Examples of the graphite material may include natural graphite and artificial graphite. Typical examples of the artificial graphite may include artificial graphite obtained by heat treatment at 2,800°C or higher, graphitized MCMB obtained by heat treatment of MCMB at 2,000°C or higher, and graphitized mesophase pitch carbon fibers obtained by heat treatment of mesophase pitch carbon fibers at 2,000°C or higher.

Among the aforementioned carbon active materials, the carbonaceous material is preferable. When the carbonaceous material is used, resistance of the secondary battery can be reduced, and a secondary battery having excellent input and output property can be produced.

As the negative electrode active material, one species thereof may be solely used, or two or more species thereof may be used in combination at any ratio.

It is preferable that the negative electrode active material is in a form of granular particles. When the particles have a spherical shape, an electrode having a higher density can be formed in the formation of the electrode.

The volume average particle diameter of particles of the negative electrode active material is appropriately selected in view of the balance between other components of the secondary battery. The volume average particle diameter is usually 0.1 µm or larger, preferably 1 µm or larger, and more preferably 5 µm or larger, and usually 100 µm or smaller, preferably 50 µm or smaller, and more preferably 20 µm or smaller.

From the viewpoint of improvement in battery properties such as initial efficiency, load property, and cycle property, the 50% volume cumulative particle diameter of particles of the negative electrode active material is usually 1 µm or larger and preferably 15 µm or larger, and usually 50 µm or smaller and preferably 30 µm or smaller. The 50% volume cumulative particle diameter may be calculated as a particle diameter at which the accumulated volume calculated in a particle diameter distribution measured by the laser diffraction method from a small particle diameter side is 50%.

The tap density of the negative electrode active material is not particularly limited. A material having tap density of 0.6 g/cm³ or more may be suitably used.

From the viewpoint of improvement in power density, the specific surface area of the negative electrode active material is usually 2 m²/g or larger, preferably 3 m²/g or larger, and more preferably 5 m²/g or larger, and usually 20 m²/g or smaller, preferably 15 m²/g or smaller, and more preferably 10 m²/g or smaller. The specific surface area of the negative electrode active material may be measured by, e.g., a BET method.

### [1-2. Binder]

The binder is a component for binding the electrode active material in the negative electrode to the surface of the current collector. In the negative electrode of the present invention, the binder binds the negative electrode active material, so that the negative electrode active material is prevented from being separated from the negative electrode active material layer. Usually, the binder also binds particles other than the negative electrode active material that are contained in the negative electrode active material layer and plays a role in maintaining the strength of the negative electrode active material layer.

As the binder, it is preferable to use a material having high ability to hold the negative electrode active material and high adhesion property to the current collector As the binder, a polymer is usually used. In this case, the polymer may be a homopolymer or a copolymer. Particularly, the polymer as the binder is preferably a polymer containing an aliphatic conjugated diene monomer unit. The aliphatic conjugated diene monomer unit is a flexible repeating unit having a low rigidity. Therefore, when a polymer containing the aliphatic conjugated diene monomer unit is used as the binder, sufficient adhesion property between the negative electrode active material layer and the current collector can be obtained.

The aliphatic conjugated diene monomer unit is a repeating unit obtained by polymerization of an aliphatic conjugated diene monomer. Examples of the aliphatic conjugated diene monomer may include 1,3-butadiene, 2-methyl-1,3-butadiene, 2,3-dimethyl-1,3-butadiene, 2-chloro-1,3-butadiene, substituted straight-chain conjugated pentadienes, and substituted branched-chain conjugated hexadienes. Among them, 1,3-butadiene is preferable.
As the aliphatic conjugated diene monomer, one species thereof may be solely used, or two or more species thereof may be used in combination at any ratio. Therefore, the polymer as the binder may contain solely one species of the aliphatic conjugated diene monomer unit, or two or more species thereof in combination at any ratio.

In 100 parts by weight of the polymer as the binder, the ratio of the aliphatic conjugated diene monomer unit is usually 20 parts by weight or more and preferably 30 parts by weight or more, and usually 70 parts by weight or less, preferably 60 parts by weight or less, and more preferably 55 parts by weight or less. When the ratio of the aliphatic conjugated diene monomer unit is set to be equal to or more than the lower limit of the aforementioned range, flexibility of the negative electrode can be improved. When the ratio is set to be equal to or less than the upper limit, sufficient adhesion property between the negative electrode active material layer and the current collector can be obtained, and resistance of the electrode against the electrolytic solution can be improved.

It is preferable that the polymer as the binder contains an aromatic vinyl monomer unit. The aromatic vinyl monomer unit is stable and can reduce the solubility of the polymer containing the aromatic vinyl monomer unit in an electrolytic solution, to thereby stabilize the negative electrode active material layer.

The aromatic vinyl monomer unit is a repeating unit obtained by polymerization of an aromatic vinyl monomer. Examples of the aromatic vinyl monomer may include styrene, α-methylstyrene, vinyltoluene, and divinylbenzene. Among them, styrene is preferable. When the fact that the polymer as the binder preferably contains an aliphatic conjugated diene monomer unit such as butadiene is also taken into consideration, it is preferable that the polymer as the binder is a polymer containing an aliphatic conjugated diene monomer unit and an aromatic vinyl monomer unit and is preferably, e.g., a styrene-butadiene copolymer.
As the aromatic vinyl monomer, one species thereof may be solely used, or two or more species thereof may be used in combination at any ratio. Therefore, the polymer as the binder may contain solely one species of the aromatic vinyl monomer, or two or more species thereof in combination at any ratio.

When the aromatic vinyl monomer is used, the polymer as the binder may contain an unreacted aliphatic conjugated diene monomer and an unreacted aromatic vinyl monomer as residual monomers. In this a case, the amount of the unreacted aliphatic conjugated diene monomer contained in the polymer as the binder is preferably 50 ppm or less and more preferably 10 ppm or less, and the amount of the unreacted aromatic vinyl monomer contained in the polymer as the binder is preferably 1,000 ppm or less and more preferably 200 ppm or less. In the production of a negative electrode by applying the slurry composition for a negative electrode of the present invention onto the surface of the current collector and drying the slurry, when the amount of the aliphatic conjugated diene monomer contained in the polymer as the binder is set within the aforementioned range, roughing of the surface of the negative electrode due to foaming can be prevented and environmental impact caused by odor can be prevented. Further, when the amount of the aromatic vinyl monomer contained in the polymer as the binder is set within the aforementioned range, environmental load that might be caused depending on drying conditions and surface roughing of the negative electrode can be suppressed. In addition, resistance of the polymer as the binder against the electrolytic solution can be enhanced.

In 100 parts by weight of the polymer as the binder, the ratio of the aromatic vinyl monomer unit is usually 30 parts by weight or more and preferably 35 parts by weight or more, and usually 79.5 parts by weight or less and preferably 69 parts by weight or less. When the ratio of the aromatic vinyl monomer unit is set to be equal to or larger than the lower limit of the aforementioned range, resistance of the negative electrode for the secondary battery of the present invention against the electrolytic solution can be improved. When the ratio is set to be equal to or lower than the upper limit, sufficient adhesion property between the negative electrode active material layer and the current collector can be obtained after the slurry composition for a negative electrode according to the present invention is applied onto the current collector.

It is preferable that the polymer as the binder contains an ethylenically unsaturated carboxylic acid monomer unit. The ethylenically unsaturated carboxylic acid monomer unit is a repeating unit that has a carboxyl group (-COOH group) that enhances adsorption ability to the negative electrode active material and to the current collector, and that has high strength. Therefore, separation of the negative electrode active material from the negative electrode active material layer can thereby be stably prevented, and strength of the negative electrode can thereby be improved.

The ethylenically unsaturated carboxylic acid monomer unit is a repeating unit obtained by polymerization of an ethylenically unsaturated carboxylic acid monomer. Examples of the ethylenically unsaturated carboxylic acid monomer may include monocarboxylic acids and dicarboxylic acids such as acrylic acid, methacrylic acid, crotonic acid, maleic acid, fumaric acid, and itaconic acid and anhydrides thereof. Among them, it is preferable to use monomers selected from the group consisting of acrylic acid, methacrylic acid, and itaconic acid solely or in combination from the viewpoint of stability of the slurry composition for a negative electrode of the present invention.
As the ethylenically unsaturated carboxylic acid monomer, one species thereof may be solely used, or two or more species thereof may be used in combination at any ratio. Therefore, the polymer as the binder may contain solely one species of the ethylenically unsaturated carboxylic acid monomer unit, or two or more species thereof in combination at any ratio.

In 100 parts by weight of the polymer as the binder, the ratio of the ethylenically unsaturated carboxylic acid monomer unit is usually 0.5 parts by weight or more, preferably 1 part by weight or more, and more preferably 2 parts by weight or more, and usually 10 parts by weight or less, preferably 8 parts by weight or less, and more preferably 7 parts by weight or less. When the ratio of the ethylenically unsaturated carboxylic acid monomer unit is set to be equal to or more than the lower limit of the range, stability of the slurry composition for a negative electrode of the present invention can be enhanced. When it is set to be equal to or less than the upper limit, excessive increase in viscosity of the slurry for a negative electrode of the present invention can be prevented, and the slurry can be easily handled.

The polymer as the binder may contain an optional repeating unit other than the aforementioned repeating units, so long as the effects of the present invention are not significantly impaired. Examples of the monomer corresponding to the aforementioned optional repeating unit may include a vinyl cyanide monomer, an unsaturated carboxylic acid alkyl ester monomer, an unsaturated monomer having a hydroxyalkyl group, and an unsaturated carboxylic acid amide monomer. One species of them may be solely used, or two or more species thereof may be used in combination at any ratio.

Examples of the vinyl cyanide monomer may include acrylonitrile, methacrylonitrile, α-chloroacrylonitrile, and α-ethylacrylonitrile. Among them, acrylonitrile and methacrylonitrile are preferable. One species of them may be solely used, or two or more species thereof may be used in combination at any ratio.

Examples of the unsaturated carboxylic acid alkyl ester monomer may include methyl acrylate, methyl methacrylate, ethyl acrylate, ethyl methacrylate, butyl acrylate, glycidyl methacrylate, dimethyl fumarate, diethyl fumarate, dimethyl maleate, diethyl maleate, dimethyl itaconate, monomethyl fumarate, monoethyl fumarate, and 2-ethylhexyl acrylate. Among them, methyl methacrylate is preferable. One species of them may be solely used, or two or more species thereof may be used in combination at any ratio.

Examples of the unsaturated monomer having a hydroxyalkyl group may include β-hydroxyethyl acrylate, β-hydroxyethyl methacrylate, hydroxypropyl acrylate, hydroxypropyl methacrylate, hydroxybutyl acrylate, hydroxybutyl methacrylate, 3-chloro-2-hydroxypropyl methacrylate, di-(ethylene glycol) maleate, di-(ethylene glycol) itaconate, 2-hydroxyethyl maleate, bis(2-hydroxyethyl) maleate, and 2-hydroxyethylmethyl fumarate. Among them, β-hydroxyethyl acrylate is preferable. One species of them may be solely used, or two or more species thereof may be used in combination at any ratio.

Examples of the unsaturated carboxylic acid amide monomer may include acrylamide, methacrylamide, N-methylol acrylamide, N-methylol methacrylamide, and N,N-dimethyl acrylamide. Among them, acrylamide and methacrylamide are preferable. One species of them may be solely used, or two or more species thereof may be used in combination at any ratio.

Moreover, a monomer used for general emulsion polymerization such as ethylene, propylene, vinyl acetate, vinyl propionate, vinyl chloride, or vinylidene chloride may be used for the polymer as the binder. One species of them may be solely used, or two or more species thereof may be used in combination at any ratio.

The weight average molecular weight of the polymer as the binder is preferably 10,000 or larger and more preferably 20,000 or larger, and preferably 1,000,000 or smaller and more preferably 500,000 or smaller. When the weight average molecular weight of the polymer as the binder is within the aforementioned range, strength of the negative electrode of the present invention and dispersibility of the negative electrode active material can easily be set in a favorable state. The weight average molecular weight of the polymer as the binder may be determined as a polystyrene equivalent value by gel permeation chromatography (GPC) using tetrahydrofuran as a developing solvent.

The glass transition temperature of the binder is preferably -75°C or higher, more preferably -55°C or higher, and particularly preferably -35°C or higher, and usually 40°C or lower, preferably 30°C or lower, more preferably 20°C or lower, and particularly preferably 15°C or lower. When the glass transition temperature of the binder falls within the aforementioned range, properties such as the flexibility, bonding property, and winding property of the negative electrode, and the adhesion property between the negative electrode active material layer and the current collector are highly balanced, and such a binder is therefore preferable.

Usually, the binder is a water-insoluble polymer. Therefore, in the slurry composition for a negative electrode of the present invention, the binder is not dissolved but is dispersed in the form of particles in water which is a solvent. That a polymer is water-insoluble means that when 0.5 g of the polymer is dissolved in 100 g of water at 25°C, the insoluble amount is 90 wt% or more. That a polymer is water-soluble means that when 0.5 g of the polymer is dissolved in 100 g of water at 25°C, the insoluble amount is less than 0.5 wt%.

When the binder is present in the form of particles, the number average particle diameter of particles of the binder is preferably 50 nm or larger and more preferably 70 nm or larger, and preferably 500 nm or smaller and more preferably 400 nm or smaller. When the number average particle diameter of the binder is within the aforementioned range, the strength and flexibility of the negative electrode to be obtained can be made favorable. The presence of the particles may be easily measured by, e.g., the transmission electron microscopy method, the Coulter counter method, and the laser diffraction method.

The binder is produced by, e.g., polymerization of a monomer composition containing the aforementioned monomers in an aqueous solvent.
The ratio of each monomer in the monomer composition is usually the same as the ratio of each of the repeating units (such as the aliphatic conjugated diene monomer unit, the aromatic vinyl monomer unit, and the ethylenically unsaturated carboxylic acid monomer unit) in the polymer as the binder.

The aqueous solvent is not especially limited as long as the particles of the binder can be dispersed therein. The aqueous solvent is usually selected from aqueous solvents having a boiling point at normal pressure of usually 80°C or higher and preferably 100°C or higher, and usually 350°C or lower and preferably 300°C or lower. Examples of the aqueous solvents may be as follows. In the following examples, numeral in parentheses after a solvent name denotes a boiling point (unit: °C) at normal pressure, which is a value calculated by rounding fractions off or down to the nearest whole number.

Examples of the aqueous solvent may include water (100); ketones such as diacetone alcohol (169) and γ-butyrolactone (204); alcohols such as ethyl alcohol (78), isopropyl alcohol (82), and normal propyl alcohol (97); glycol ethers such as propylene glycol monomethyl ether (120), methyl cellosolve (124), ethyl cellosolve (136), ethylene glycol tert-butyl ether (152), butyl cellosolve (171), 3-methoxy-3-methyl-1-butanol (174), ethylene glycol monopropyl ether (150), diethylene glycol monobutyl ether (230), triethylene glycol monobutyl ether (271), and dipropylene glycol monomethyl ether (188); and ethers such as 1,3-dioxolane (75), 1,4-dioxolane (101), and tetrahydrofuran (66). Among them, water is particularly preferable since it is non-flammable and a dispersion of the particles of the binder is easily obtainable. With water that is used as a main solvent, an aqueous solvents other than water among the aforementioned solvents may be mixed within a range in which the dispersed state of the particles of the binder can be secured.

The polymerization method is not particularly limited. For example, any method of a solution polymerization method, a suspension polymerization method, a bulk polymerization method, and an emulsion polymerization method may be used. As the polymerization method, any method of ion polymerization, radical polymerization, and living radical polymerization may be used. Among them, the emulsion polymerization method is particularly preferable because of its ability to easily produce a polymer having a high molecular weight, and from the viewpoint of manufacturing efficiency in terms of, e.g., that re-dispersion treatment is unnecessary since the obtained polymer as it is may be in a dispersion state in water, and the polymer as it is may be subjected to the production of the slurry composition for a negative electrode of the present invention.

The emulsion polymerization method is usually performed in accordance with a conventional method. For example, a method described in "Jikken Kagaku Kouza (Course of Experimental Chemistry)", vol. 28 (published by Maruzen Publishing Co., Ltd., and edited by The Chemical Society of Japan) is performed. This method is a method in which water, additives such as a dispersing agent, an emulsifier and a crosslinking agent, a polymerization initiator, and monomers are placed in a hermetically sealed vessel equipped with a stirrer and a heating device so that the mixture has a predetermined composition; the composition in the vessel is stirred to emulsify the monomers and the like in water; and the temperature is increased while the components are stirred, so as to initiate polymerization. Alternatively, the method may be a method in which the composition is emulsified and then placed in a hermetically sealed vessel, and the reaction is initiated in a similar manner.

Examples of the polymerization initiator may include organic peroxides such as lauroyl peroxide, diisopropyl peroxydicarbonate, di-2-ethylhexyl peroxydicarbonate, t-butyl peroxypivalate, and 3,3,5-trimethyl hexanoyl peroxide; azo compounds such as α,α'-azobisisobutyronitrile; ammonium persulfate; and potassium persulfate. As the polymerization initiator, one species thereof may be solely used, or two or more species thereof may be used in combination at any ratio.

The emulsifier, the dispersing agent, the polymerization initiator, etc. are those generally used in these polymerization methods. Usually the using amount thereof is set to general using amount. In the polymerization, seed polymerization using seed particles may be performed.

Polymerization temperature and polymerization time may be optionally set depending on, e.g., the polymerization method and species of polymerization initiator. Usually, the polymerization temperature is about 30°C or higher and the polymerization time is about 0.5 hours to 30 hours.
As an auxiliary agent for polymerization, an additive such as amines may be used.

The aqueous dispersion solution of the particles of the particles of the binder thus obtained by these methods may be subjected to pH adjustment to be in a range of usually 5 to 10, and preferably 5 to 9 by, e.g., mixing the solution with an aqueous basic solution containing, e.g., a hydroxide of an alkali metal (for example, Li, Na, K, Rb, and Cs), ammonia, an inorganic ammonium compound (for example, NH4Cl), or an organic amine compound (for example, ethanol amine and diethyl amine). In particular, the pH adjustment using an alkali metal hydroxide is preferable since thereby bonding property (peel strength) between the current collector and the negative electrode active material can be enhanced.

The particles of the binder may be complex polymer particles of two or more species of polymers. The complex polymer particles may be obtained by a method in which one or more species of monomer component is polymerized through a conventional procedure, followed by polymerization of one or more other species of monomer component, wherein the polymerization is performed in accordance with a conventional procedure (two-step polymerization method). When the monomers are thus polymerized in a stepwise procedure, particles having a core-shell structure that has a core layer present in the inside of the particles and a shell layer coating the core layer can be obtained.

The amount of the binder is usually 0.3 part by weight or more, and preferably 0.5 part by weight or more, and usually 8 parts by weight or less, preferably 4 parts by weight or less, and more preferably 2 parts by weight or less, relative to 100 parts by weight of the negative electrode active material. When the amount of the binder is set within the aforementioned range, viscosity of the slurry composition for a negative electrode of the present invention is adequately adjusted, and the slurry can be smoothly applied onto the current collector. In addition, resistance of the negative electrode of the present invention is thereby kept at a low level, and sufficient adhesion strength between the current collector and the negative electrode active material layer is obtained. Therefore, separation of the binder from the negative electrode active material layer can be suppressed in the step of pressurization treatment of the negative electrode active material layer.

### [1-3. Water-soluble polymer]

The water-soluble polymer according to the present invention contains an ethylenically unsaturated carboxylic acid monomer unit, a (meth)acrylic acid ester monomer unit, and a fluorine-containing (meth)acrylic acid ester monomer unit in a specific composition ratio. When the negative electrode of the present invention contains the water-soluble polymer, it can realize a secondary battery in which swelling of the negative electrode upon charging and discharging is suppressed and a reduction in capacity during storage in a high-temperature environment is less likely to occur. As a result of using the water-soluble polymer of the present invention, the slurry composition for a negative electrode of the present invention exerts good application capability when it is applied onto a current collector. In addition, the negative electrode active material layer exerts good adhesion property onto the current collector, and the secondary battery of the present invention usually exerts good high-temperature cycle property and low-temperature output property.
It is not clear why such excellent effects are obtained. However, according to the studies by the present inventor, it is assumed that this is based on the following reasons.

Among the repeating units contained in the water-soluble polymer according to the present invention, the ethylenically unsaturated carboxylic acid monomer unit includes a carboxyl group. Therefore, solubility of the water-soluble polymer according to the present invention in water can be improved, and adsorption of the water-soluble polymer according to the present invention onto the negative electrode active material can be facilitated. Further, since the (meth)acrylic acid ester monomer unit has high strength, it can stabilize the molecules of the water-soluble polymer according to the present invention. Further, since the polymer contains the fluorine-containing (meth)acrylic acid ester monomer unit, water swellability of the water-soluble polymer according to the present invention (the degree of swelling of the water-soluble polymer caused by absorption of water when the water-soluble polymer is immersed in water) is improved, and the water-soluble polymer can be elastically deformed. It is assumed that the combination of these functions brings about the aforementioned effects.

More specifically, when the negative electrode active material expands or contracts in the negative electrode, the water-soluble polymer is capable of being elastically deformed in response to the expansion or contraction of the negative electrode active material, so that swelling of the negative electrode during charging and discharging can be suppressed.

In the prior art, after the repetition of expansion and contraction of the negative electrode active material, the binder can no longer adhere to the negative electrode active material. In this case, a gap may be formed in the negative electrode active material or between the negative electrode active material and the electroconducting agent, and the electrical connection between the negative electrode active material and the electroconducting agent in the negative electrode may be impaired. When such impairment of the electrical contact occurs, the electric capacity of the secondary battery may be reduced. However, when the water-soluble polymer is capable of being elastically deformed in response to the expansion or contraction of the negative electrode active material, the formation of the gap can be suppressed, and the electrical contact can be maintained. Therefore, the cycle property can be improved.

In the negative electrode, the water-soluble polymer is adsorbed on the surface of the negative electrode active material and covers the negative electrode active material to thereby form a protective layer. This protective layer can suppress decomposition of the electrolytic solution in a high-temperature environment and decomposition of the electrolytic solution during charging and discharging. When the electrolytic solution is decomposed, air bubbles are formed around the negative electrode active material. The air bubbles inhibit electron transfer, and may cause reduction in the electric capacity of the secondary battery. However, when the decomposition of the electrolytic solution can be suppressed by the water-soluble polymer, reduction in electric capacity can be suppressed, and therefore high-temperature storage property and high-temperature cycle property can be improved.

The protective layer formed of the water-soluble polymer according to the present invention has higher ion conductivity than that of a protective layer formed of a conventional additive such as carboxymethyl cellulose (appropriately referred to hereinbelow as "CMC"). It is assumed that this is because the water-soluble polymer according to the present invention is swellable with an electrolytic solution (when the water-soluble polymer is immersed in the electrolytic solution, the water-soluble polymer absorbs the electrolytic solution and swells therewith). Because of its high ion conductivity, diffusion resistance (resistance that impedes ion diffusion) decreases. Therefore, the secondary battery of the present invention has high output property and particularly is excellent in low-temperature output property. Even though the water-soluble polymer is swellable with the electrolytic solution, the degree of swelling is such that the solvent for the electrolytic solution cannot easily pass through the protective film. Therefore, the aforementioned effect of suppressing decomposition of the electrolytic solution is sufficiently achieved.

The water-soluble polymer according to the present invention has high solubility in water and can easily be adsorbed on the negative electrode active material. Therefore, in the entirety of the slurry composition for a negative electrode of the present invention, the water-soluble polymer covers the surfaces of the particles of the negative electrode active material, so that the dispersibility of the particles of the negative electrode active material can be improved. In the slurry composition for a negative electrode of the present invention, the dispersibility of the particles of the negative electrode active material is improved also by the electrostatic repulsion of the carboxyl groups that the water-soluble polymer has. Therefore, the negative electrode active material are less likely to form lumps during application of the slurry composition for a negative electrode, so that a coating layer having a uniform thickness and a uniform composition can be easily formed. In the negative electrode active material layer obtained from the coating layer that has been formed in this manner, the negative electrode active material is well dispersed, so that electric capacity of the secondary battery can be improved.

Since the water-soluble polymer according to the present invention is highly flexible and soft, it can easily adhere to the surface of the current collector and the surface of the negative electrode active material with no gap therebetween. Therefore, the water-soluble polymer strengthens binding of the binder to the current collector and to the negative electrode active material, whereby the adhesive power can be improved. Accordingly, it can improve adhesion property of the negative electrode active material layer to the current collector.

The ethylenically unsaturated carboxylic acid monomer unit is a repeating unit obtained by polymerization of an ethylenically unsaturated carboxylic acid monomer.
Examples of the ethylenically unsaturated carboxylic acid monomer may include ethylenically unsaturated monocarboxylic acids and derivatives thereof, as well as ethylenically unsaturated dicarboxylic acids and acid anhydrides thereof, and derivatives thereof. Examples of the ethylenically unsaturated monocarboxylic acids may include acrylic acid, methacrylic acid, and crotonic acid. Examples of the derivatives of the ethylenically unsaturated monocarboxylic acids may include 2-ethylacrylic acid, isocrotonic acid, α-acetoxyacrylic acid, β-trans-aryloxyacrylic acid, α-chloro-β-E-methoxyacrylic acid, and β-diaminoacrylic acid. Examples of the ethylenically unsaturated dicarboxylic acids may include maleic acid, fumaric acid, and itaconic acid. Examples of the acid anhydrides of the ethylenically unsaturated dicarboxylic acids may include maleic anhydride, acrylic anhydride, methylmaleic anhydride, and dimethylmaleic anhydride. Examples of the derivatives of the ethylenically unsaturated dicarboxylic acids may include: a methylallyl maleate such as methyl maleic acid, dimethylmaleic acid, phenylmaleic acid, chloromaleic acid, dichloromaleic acid, and fluoromaleic acid; and a maleic acid esters such as diphenyl maleate, nonyl maleate, decyl maleate, dodecyl maleate, octadecyl maleate, and fluoroalkyl maleate. Among them, ethylenically unsaturated monocarboxylic acids such as acrylic acid and methacrylic acid are preferable. This is because dispersibility of the obtained water-soluble polymer in water can be further improved.

As the ethylenically unsaturated carboxylic acid monomer, one species thereof may be solely used, or two or more species thereof may be used in combination at any ratio. Therefore, the water-soluble polymer according to the present invention may contain solely one species of the ethylenically unsaturated carboxylic acid monomer unit, or two or more species thereof in combination at any ratio.

In the water-soluble polymer according to the present invention, the ratio of the ethylenically unsaturated carboxylic acid monomer unit is usually 15 wt% or more, preferably 20 wt% or more, and more preferably 25 wt% or more, and usually 50 wt% or less, preferably 45 wt% or less, and more preferably 40 wt% or less. When the amount of the ethylenically unsaturated carboxylic acid monomer unit is set to be equal to or larger than the lower limit of the aforementioned range, adsorption ability of the water-soluble polymer to the negative electrode active material is improved, so that dispersibility of the negative electrode active material and its adhesion property to the current collector can be improved. When the amount is set to be equal to or lower than the upper limit, flexibility of the water-soluble polymer can be improved. Therefore, flexibility of the negative electrode can be improved, and chipping and cracking of the negative electrode can be prevented, so that its durability can be improved.

The (meth)acrylic acid ester monomer unit is a repeating unit obtained by polymerization of a (meth)acrylic acid ester monomer. However, a (meth)acrylic acid ester monomer containing fluorine is referred to as a fluorine-containing (meth)acrylic acid ester monomer and is distinguished from the (meth)acrylic acid ester monomer.

Examples of the (meth)acrylic acid ester monomer may include alkyl acrylates such as methyl acrylate, ethyl acrylate, n-propyl acrylate, isopropyl acrylate, n-butyl acrylate, t-butyl acrylate, pentyl acrylate, hexyl acrylate, heptyl acrylate, octyl acrylate, 2-ethylhexyl acrylate, nonyl acrylate, decyl acrylate, lauryl acrylate, n-tetradecyl acrylate, and stearyl acrylate; and alkyl methacrylates such as methyl methacrylate, ethyl methacrylate, n-propyl methacrylate, isopropyl methacrylate, n-butyl methacrylate, t-butyl methacrylate, pentyl methacrylate, hexyl methacrylate, heptyl methacrylate, octyl methacrylate, 2-ethylhexyl methacrylate, nonyl methacrylate, decyl methacrylate, lauryl methacrylate, n-tetradecyl methacrylate, and stearyl methacrylate.

As the (meth)acrylic acid ester monomer, one species thereof may be solely used, or two or more species thereof may be used in combination at any ratio. Therefore, the water-soluble polymer according to the present invention may contain solely one species of the (meth)acrylic acid ester monomer unit, or two or more species thereof in combination at any ratio.

In the water-soluble polymer according to the present invention, the ratio of the (meth)acrylic acid ester monomer unit is usually 30 wt% or more, preferably 35 wt% or more, and more preferably 40 wt% or more, and usually 70 wt% or less. When the amount of the (meth)acrylic acid ester monomer unit is set to be equal to or larger than the lower limit of the aforementioned range, adhesion property of the negative electrode active material to the current collector can be improved. When the amount is set to be equal to or lower than the upper limit of the aforementioned range, flexibility of the negative electrode can be improved.

The fluorine-containing (meth)acrylic acid ester monomer unit is a repeating unit obtained by polymerization of the fluorine-containing (meth)acrylic acid ester monomer.
Examples of the fluorine-containing (meth)acrylic acid ester monomer may include a monomer represented by the following formula (I).

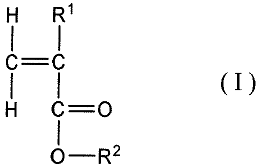

In the aforementioned formula (I), R¹ represents a hydrogen atom or a methyl group.
In the aforementioned formula (I), R² represents a hydrocarbon group containing a fluorine atom. The number of carbon atoms in the hydrocarbon group is usually one or more and is usually 18 or less. The number of fluorine atoms contained in R² may be one and may be two or more.

Examples of the fluorine-containing (meth)acrylic acid ester monomer represented by the formula (I) may include fluorinated alkyl (meth)acrylates, fluorinated aryl (meth)acrylates, and fluorinated aralkyl (meth)acrylates. Among them, fluorinated alkyl (meth)acrylates are preferable. Specific examples of such monomers may include perfluoroalkyl (meth)acrylates such as trifluoromethyl (meth)acrylate, 2,2,2-trifluoroethyl (meth)acrylate, β-(perfluorooctyl)ethyl (meth)acrylate, 2,2,3,3-tetrafluoropropyl (meth)acrylate, 2,2,3,4,4,4-hexafluorobutyl (meth)acrylate, 1H,1H,9H-perfluoro-1-nonyl (meth)acrylate, 1H,1H,11H-perfluoroundecyl (meth)acrylate, perfluorooctyl (meth)acrylate, and 3[4[1-trifluoromethyl-2,2-bis[bis(trifluoromethyl)fluoromethyl]ethynyloxy]benzoxy]2-hydroxypropyl (meth)acrylate.

As the fluorine-containing (meth)acrylic acid ester monomer, one species thereof may be solely used, or two or more species thereof may be used in combination at any ratio. Therefore, the water-soluble polymer according to the present invention may contain solely one species of the fluorine-containing (meth)acrylic acid ester monomer unit, or two or more species thereof in combination at any ratio.

In the water-soluble polymer according to the present invention, the ratio of the fluorine-containing (meth)acrylic acid ester monomer unit is usually 0.5 wt% or more and preferably 1 wt% or more, and usually 10 wt% or less and preferably 5 wt% or less. When the amount of the fluorine-containing (meth)acrylic acid ester monomer unit is set to be equal to or larger than the lower limit of the aforementioned range, low-temperature output property of the secondary battery can be improved. When the amount is set to be equal to or lower than the upper limit, the water-soluble polymer is prevented from becoming excessively soft, so that reduction in the durability of the negative electrode can be prevented.

The water-soluble polymer according to the present invention may contain a repeating unit other than the aforementioned ethylenically unsaturated carboxylic acid monomer unit, (meth)acrylic acid ester monomer unit and fluorine-containing (meth)acrylic acid ester monomer unit, so long as the effects of the present invention are not significantly impaired. Such a repeating unit is a repeating unit obtained by polymerization of a monomer copolymerizable with the ethylenically unsaturated carboxylic acid monomer, the (meth)acrylic acid ester monomer, or the fluorine-containing (meth)acrylic acid ester monomer.

Examples of such a copolymerizable monomer may include: a carboxylic acid ester monomer having two or more carbon-carbon double bonds such as ethylene glycol dimethacrylate, diethylene glycol dimethacrylate, and trimethylolpropane triacrylate; a styrene-based monomer such as styrene, chlorostyrene, vinyltoluene, t-butylstyrene, vinylbenzoic acid, methyl vinylbenzoate, vinylnaphthalene, chloromethylstyrene, hydroxymethylstyrene, α-methylstyrene, and divinylbenzene; an amide-based monomer such as acrylamide, N-methylolacrylamide, and acrylamide-2-methylpropane sulfonic acid; an α,β-unsaturated nitrile compound monomer such as acrylonitrile and methacrylonitrile; an olefin monomer such as ethylene and propylene; a halogen atom-containing monomer such as vinyl chloride and vinylidene chloride; a vinyl ester monomer such as vinyl acetate, vinyl propionate, vinyl butyrate, and vinyl benzoate; a vinyl ether monomer such as methyl vinyl ether, ethyl vinyl ether, and butyl vinyl ether; a vinyl ketone monomer such as methyl vinyl ketone, ethyl vinyl ketone, butyl vinyl ketone, hexyl vinyl ketone, and isopropenyl vinyl ketone; and a heterocycle-containing vinyl compound monomer such as N-vinylpyrrolidone, vinylpyridine, and vinylimidazole.

As the aforementioned copolymerizable monomer, one species thereof may be solely used, or two or more species thereof may be used in combination at any ratio. Therefore, the water-soluble polymer according to the present invention may contain solely one species of the repeating unit other than the ethylenically unsaturated carboxylic acid monomer unit, the (meth)acrylic acid ester monomer unit and the fluorine-containing (meth)acrylic acid ester monomer unit, or two or more species thereof in combination at any ratio.

In the water-soluble polymer according to the present invention, the ratio of the repeating unit other than the ethylenically unsaturated carboxylic acid monomer unit, the (meth)acrylic acid ester monomer unit and the fluorine-containing (meth)acrylic acid ester monomer unit is preferably 0 wt% to 10 wt% and more preferably 0 wt% to 5 wt%.

The weight average molecular weight of the water-soluble polymer is usually smaller than that of the polymer as the binder, and is preferably 100 or larger, more preferably 500 or larger, and particularly preferably 1,000 or larger, and preferably 500,000 or smaller, more preferably 250,000 or smaller, and particularly preferably 100,000 or smaller. When the weight average molecular weight of the water-soluble polymer is set to be equal to or larger than the lower limit of the aforementioned range, the strength of the water-soluble polymer can be increased, and a stable protective layer covering the negative electrode active material can be formed, which may result in improvement in, e.g., the dispersibility of the negative electrode active material and the high-temperature storage property of the secondary battery. When the weight average molecular weight is set to be equal to or smaller than the upper limit of the aforementioned range, the water-soluble polymer can be made soft, which enables, e.g., suppression of swelling of the negative electrode and improvement in the adhesion property of the negative electrode active material layer to the current collector. The weight average molecular weight of the water-soluble polymer may be determined as a polyethylene oxide equivalent value by GPC using, as a developing solvent, a solution obtained by dissolving 0.85 g/ml of sodium nitrate in a 10 vol% aqueous acetonitrile solution.

The glass transition temperature of the water-soluble polymer is usually 0°C or higher and preferably 5°C or higher, and usually 100°C or lower and preferably 50°C or lower. When the glass transition temperature of the water-soluble polymer is set to be within the aforementioned range, both adhesion property and flexibility of the negative electrode can be achieved. The glass transition temperature of the water-soluble polymer is adjustable by combining a variety of monomers.

The viscosity of the water-soluble polymer is usually 0.1 mPa·s or higher, preferably 1 mPa·s or higher, and more preferably 10 mPa·s or higher, and usually 20,000 mPa·s or lower, preferably 10,000 mPa·s or lower, and more preferably 5,000 mPa·s or lower, when the measurement is performed for a 1wt% aqueous solution. When the viscosity is set to be equal to or higher than the lower limit of the aforementioned range, the strength of the water-soluble polymer can be increased, and the durability of the negative electrode can thereby be improved. When the viscosity is set to be equal to or lower than the upper limit, good application capability of the slurry composition for a negative electrode can be achieved, and the adhesion strength between the current collector and the negative electrode active material layer can be improved. The viscosity is adjustable by, e.g., changing the molecular weight of the water-soluble polymer. The aforementioned viscosity is a value measured using an E type viscometer at 25°C and a rotation speed of 60 rpm.

Regarding the production method for the water-soluble polymer, the production may be performed by, e.g., polymerization of a monomer composition containing the aforementioned ethylenically unsaturated carboxylic acid monomer, (meth)acrylic acid ester monomer and fluorine-containing (meth)acrylic acid ester monomer in an aqueous solvent. The aqueous solvent and the polymerization method may be the same as those for, e.g., the production of the binder. In this manner, an aqueous solution in which the water-soluble polymer is dissolved in the aqueous solvent is usually obtained. The water-soluble polymer may be taken out of the aqueous solution thus obtained. However, usually, the water-soluble polymer in the state of being dissolved in the aqueous solvent is used for producing the slurry composition for a negative electrode, and the slurry composition for a negative electrode is used for producing the negative electrode.

The aforementioned aqueous solution containing the water-soluble polymer in the aqueous solvent is usually acidic. Therefore, if necessary, the aqueous solution may be alkalified to pH 7 - pH 13. This can improve handling capability of the aqueous solution and can improve the application capability of the slurry composition for a negative electrode. Examples of the method of alkalization to pH 7 - pH 13 may include a method including mixing: an aqueous alkali metal solution such as an aqueous lithium hydroxide solution, an aqueous sodium hydroxide solution, or an aqueous potassium hydroxide solution; an aqueous alkaline earth metal solution such as an aqueous calcium hydroxide solution or an aqueous magnesium hydroxide solution; or an aqueous alkaline solution such as an aqueous ammonia solution. As the aqueous alkaline solution, one species thereof may be solely used, or two or more species thereof may be used in combination at any ratio.

The amount of the water-soluble polymer is usually smaller than the amount of the binder. The amount of the water-soluble polymer relative to 100 parts by weight of the negative electrode active material is preferably 0.1 parts by weight or more, more preferably 0.5 parts by weight or more, and particularly preferably 1 part by weight or more, and is preferably 10 parts by weight or less and more preferably 5 parts by weight or less. When the amount of the water-soluble polymer is set to be within the aforementioned range, the aforementioned effects such as: suppression of swelling of the negative electrode upon charging and discharging; improvement in the high-temperature storage property, high-temperature cycle property, and low-temperature output property of the secondary battery; improvement in the application capability of the slurry composition for a negative electrode onto the current collector; and improvement in the adhesion property of the negative electrode active material layer to the current collector can be stably achieved.

### [1-4. Components optionally contained in negative electrode active material layer]

In the negative electrode of the present invention, the negative electrode active material layer may contain optional components other than the aforementioned negative electrode active material, binder and water-soluble polymer. Examples of the optional components may include a viscosity modifier, an electroconducting agent, a reinforcing material, a leveling agent, and an electrolytic solution additive. The optional components are not particularly limited so long as these does not affect the battery reaction. One species of these components may be solely used, or two or more species thereof may be used in combination at any ratio.

The viscosity modifier is a component used for controlling the viscosity of the slurry composition for a negative electrode of the present invention to thereby improve the dispersibility and application capability of the slurry composition for a negative electrode. The viscosity modifier contained in the slurry composition for a negative electrode usually remains in the negative electrode active material layer.

As the viscosity modifier, a water-soluble polysaccharide is preferably used. Examples of the polysaccharide may include a natural polymer and a cellulose-based semisynthetic polymer. As the viscosity modifier, one species thereof may be solely used, or two or more species thereof may be used in combination at any ratio.

Examples of the natural polymer may include polysaccharides and proteins that are derived from a plant or an animal. In some cases, examples thereof may also include natural polymers that have been subjected to fermentation by microorganism and natural polymers that have been subjected to heat treatment. These natural polymers may be classified into a plant-derived natural polymer, an animal-derived natural polymer, and a microorganism-derived polymer.

Examples of the plant-derived natural polymer may include gum arabic, gum tragacanth, galactan, guar gum, carob gum, karaya gum, carrageenan, pectin, agar, quince seed (marmelo), algae colloid (brown algae extract), starch (derived from rice, corn, potato, and wheat), and glycyrrhizin. Examples of the animal-derived natural polymer may include collagen, casein, albumin, and gelatin. Examples of the microorganism-derived natural polymer may include xanthan gum, dextran, succinoglucan, and pullulan.

The cellulose-based semisynthetic polymers may be classified into nonioic, anionic, and cationic cellulose-based semisynthetic polymers.

Examples of the nonioic cellulose-based semisynthetic polymer may include an alkyl cellulose such as methyl cellulose, methyl ethyl cellulose, ethyl cellulose, and microcrystalline cellulose; and a hydroxyalkyl cellulose such as hydroxyethyl cellulose, hydroxybutyl methyl cellulose, hydroxypropyl cellulose, hydroxypropyl methyl cellulose, hydroxyethyl methyl cellulose, hydroxypropyl methyl cellulose stearoxy ether, carboxylmethyl hydroxyethyl cellulose, alkyl hydroxyethyl cellulose, and nonoxynyl hydroxyethyl cellulose.

Examples of the anionic cellulose-based semisynthetic polymer may include alkyl cellulose obtained by substitution of the aforementioned nonioic cellulose-based semisynthetic polymers with a variety of derivation groups, and a sodium salt and an ammonium salt thereof. Specific examples thereof may include sodium cellulose sulfate, methyl cellulose, methyl ethyl cellulose, ethyl cellulose, carboxymethyl cellulose (CMC), and salts thereof.

Examples of the cationic cellulose-based semisynthetic polymer may include low-nitrogen hydroxyethyl cellulose dimethyl diallylammonium chloride (polyquaternium-4), O-[2-hydroxy-3-(trimethylammonio)propyl]hydroxyethyl cellulose chloride (polyquaternium-10), and O-[2-hydroxy-3-(lauryldimethylammonio)propyl]hydroxyethyl cellulose chloride (polyquaternium-24).

Among them, the cellulose-based semisynthetic polymer, and a sodium salt and an ammonium salt thereof are preferable since they may have a cationic property, an anionic property, or both. In particular, the anionic cellulose-based semisynthetic polymer is particularly preferable from the viewpoint of dispersibility of the negative electrode active material.

The etherification degree of the cellulose-based semisynthetic polymer is preferably 0.5 or more, and more preferably 0.6 or more, and preferably 1.0 or less, and more preferably 0.8 or less. The etherification degree herein means the degree of substitution of (three) hydroxyl group(s) to form a substitution such as a carboxymethyl group per anhydrous glucose unit in cellulose. Theoretically, the etherification degree may be a value of 0 to 3. When the etherification degree falls within the aforementioned range, the cellulose-based semisynthetic polymer exhibits an excellent dispersibility by being adsorbed on the surface of the negative electrode active material and being compatible with water. Therefore, it is possible to finely disperse the negative electrode active material at the primary particle level.

When a macromolecule (including a polymer) is used as a viscosity modifier, the average polymerization degree of the viscosity modifier that is calculated from the limiting viscosity measured with an Ubbelohde viscometer is preferably 500 or more, and more preferably 1,000 or more, and preferably 2,500 or less, more preferably 2,000 or less, and particularly preferably 1,500 or less. The average polymerization degree of the viscosity modifier may affect the flowability of the slurry composition for a negative electrode of the present invention, the film uniformity of the negative electrode active material layer, and processes in the steps. When the average polymerization degree is set within the aforementioned range, stability of the slurry composition for a negative electrode of the present invention over the lapse of time can be improved, and application free of generation of aggregates and uneven thickness can be achieved.

The amount of the viscosity modifier is preferably 0 parts by weight or more and preferably 0.5 parts by weight or less relative to 100 parts by weight of the negative electrode active material. When the amount of the viscosity modifier is set within the aforementioned range, the viscosity of the slurry composition for a negative electrode of the present invention can be adjusted within a range suitable for handling.

The electroconducting agent is a component that improves the electrical contact of the negative electrode active material segments. When the negative electrode active material layer contains the electroconducting agent, discharge rate property of the secondary battery of the present invention can be improved.

Examples of the electroconducting agent for use may include electroconductive carbon such as acetylene black, Ketjen black, carbon black, graphite, vapor grown carbon fibers, and carbon nanotubes. As the electroconducting agent, one species thereof may be solely used, or two or more species thereof may be used in combination at any ratio.

The amount of the electroconducting agent is preferably 1 to 20 parts by weight, and more preferably 1 to 10 parts by weight, relative to 100 parts by weight of the negative electrode active material.

As the reinforcement material, a variety of inorganic or organic fillers in a spherical shape, a plate shape, a rod shape, or a fiber shape may be used. Use of the reinforcement material can impart toughness and flexibility to the negative electrode, whereby a secondary battery exhibiting excellent long-term cycle property can be realized.

The amount of the reinforcement material is usually 0.01 parts by weight or more, and preferably 1 part by weight or more, and usually 20 parts by weight or less, and preferably 10 parts by weight or less, relative to 100 parts by weight of the negative electrode active material. When the amount of the reinforcing agent is set to be within the aforementioned range, the secondary battery can have a high capacity and high load property.

Examples of the leveling agent may include surfactants such as an alkyl-based surfactant, a silicone-based surfactant, a fluorine-based surfactant, and a metal-based surfactant. Use of the leveling agent can prevent cissing that otherwise occurs during application of the slurry for a negative electrode, and can also improve the smoothness of a negative electrode.

The amount of the leveling agent is preferably 0.01 parts by weight to 10 parts by weight relative to 100 parts by weight of the negative electrode active material. When the amount of the leveling agent falls within the aforementioned range, the negative electrode can be produced with high smoothness at high productivity, and excellent battery property can be obtained. When the surfactant is contained, dispersibility of the negative electrode active material etc. in the slurry composition for a negative electrode can be improved. Further, smoothness of the negative electrode thus obtained can be improved.

Examples of the electrolytic solution additive may include vinylene carbonate. Use of the electrolytic solution additive can, e.g., suppress the decomposition of electrolytic solution.
The amount of the electrolytic solution additive is preferably 0.01 parts by weight to 10 parts by weight relative to 100 parts by weight of the negative electrode active material. When the amount of the electrolytic solution additive is set within the aforementioned range, a secondary battery having excellent cycle property and high-temperature property can be realized.

The negative electrode active material layer may contain nano-fine particles of, e.g., fumed silica and fumed alumina. When the nano-fine particles are mixed, the thixotropy of the slurry composition for a negative electrode can be controlled. Therefore, the leveling property of the negative electrode thus obtained can be improved.
The amount of the nano-fine particles is preferably 0.01 parts by weight to 10 parts by weight relative to 100 parts by weight of the negative electrode active material. When the amount of the nano-fine particles falls within the aforementioned range, the stability and productivity of the slurry composition for a negative electrode can be improved, and high battery property can be achieved.

### [1-5. Current collector and negative electrode active material layer]

The negative electrode of the present invention comprises the negative electrode active material layer including the aforementioned negative electrode active material, binder and water-soluble polymer, and other components that may be used if necessary. This negative electrode active material layer is usually provided on a surface of the current collector. In this case, the negative electrode active material layer may be provided on at least one side of the current collector, and preferably on both sides of the collector.

The current collector for the negative electrode is not particularly limited as long as it is formed from a material having electroconductivity and electrochemical durability. A metal material is preferable since it has heat resistance. Examples of the material of the current collector for the negative electrode may include iron, copper, aluminum, nickel, stainless steel, titanium, tantalum, gold, and platinum. Among them, as the current collector for the negative electrode of a secondary battery, copper is particularly preferable. As the aforementioned material, one species thereof may be solely used, or two or more species thereof may be used in combination at any ratio.

The shape of the current collector is not particularly limited. The collector preferably has a sheet shape with a thickness of about 0.001 mm to 0.5 mm.
It is preferable that the current collector is roughened in advance of use for enhancing the adhesion strength of the current collector with the electrode active material. Examples of the roughening method may include a mechanical polishing method, an electrolysis polishing method, and a chemical polishing method. In the mechanical polishing method, e.g., polishing paper to which polishing agent particles are fixed, a grind stone, an emery wheel, and a wire brush having steel wire are usually used. Further, in order to improve the adhesion strength and electroconductivity of the negative electrode active material layer, an intermediate layer may be formed on the surface of the current collector.

The negative electrode active material layer is usually provided on the surface of the current collector.
The thickness of the negative electrode active material layer is usually 5 µm or more and preferably 30 µm or more, and usually 300 µm or less and preferably 250 µm or less. When the thickness of the negative electrode active material layer falls within the aforementioned range, the load property and cycle property can be improved.

The content of the negative electrode active material in the negative electrode active material layer is preferably 85 wt% or more and more preferably 88 wt% or more and preferably 99 wt% or less and more preferably 97 wt% or less. When the content of the negative electrode active material is set within the aforementioned range, a negative electrode that enables high capacity as well as flexibility and bonding power can be realized.

### [2. Method for producing negative electrode for secondary battery]

No particular limitation is imposed on the method for producing the negative electrode for the secondary battery of the present invention (appropriately referred to hereinbelow as a "method for producing the negative electrode of the present invention"). For example, the negative electrode may be produced by a production method including preparing the slurry composition for a negative electrode of the present invention, applying the slurry composition for a negative electrode onto the surface of the current collector, and drying the slurry composition.

The slurry composition for a negative electrode of the present invention is a composition in a slurry state containing the negative electrode active material, the binder, the water-soluble polymer, and water. If necessary, the slurry composition for a negative electrode of the present invention may further contain a component other than the negative electrode active material, the binder, the water-soluble polymer, and water. The amount of the negative electrode active material, the binder, the water-soluble polymer, and the component that may be contained if necessary are usually the same as the amount of those contained in the negative electrode active material layer. In the slurry composition for a negative electrode of the present invention, a part of the water-soluble polymer is usually dissolved in water. However, another part of the water-soluble polymer is usually adsorbed on the surface of the negative electrode active material. As a result, the negative electrode active material is coated with a stable layer of the water-soluble polymer, so that the dispersibility of the negative electrode active material in the solvent is improved. Accordingly, the slurry composition for a negative electrode of the present invention has good application capability when it is applied onto the current collector.

In the slurry composition for a negative electrode, water functions as a solvent or a dispersant and allows the negative electrode active material to be dispersed therein, the binder to be dispersed in the form of particles, and the water-soluble polymer to be dissolved therein. In this case, a combination of water and a liquid other than water may be used as the solvent. It is preferable to combine water with a liquid that can dissolve the binder and the water-soluble polymer, because thereby the binder and the water-soluble polymer is adsorbed on the surface of the negative electrode, whereby the dispersion of the negative electrode active material is stabilized.

Preferably, the species of liquid combined with water is selected from the viewpoint of drying rate and environmental factor. Preferable examples thereof may include: cyclic aliphatic hydrocarbons such as cyclopentane and cyclohexane; aromatic hydrocarbons such as toluene and xylene; ketones such as ethyl methyl ketone and cyclohexanone; esters such as ethyl acetate, butyl acetate, γ-butyrolactone, and ε-caprolactone; acylonitriles such as acetonitrile and propionitrile; ethers such as tetrahydrofuran and ethylene glycol diethyl ether; alcohols such as methanol, ethanol, isopropanol, ethylene glycol, and ethylene glycol monomethyl ether; amides such as N-methylpyrrolidone, and N,N-dimethylformamide. Among them, N-methylpyrrolidone (NMP) is preferable. One species of them may be solely used, or two or more species thereof may be used in combination at any ratio.

It is preferable that the amounts of water and the aforementioned liquid are adjusted such that the viscosity of the slurry composition for a negative electrode of the present invention is set to a viscosity suitable for application. Specifically, the amount is adjusted such that the concentration of the solids in the slurry composition for a negative electrode of the present invention is preferably 30 wt% or more and more preferably 40 wt% or more and is preferably 90 wt% or less and more preferably 80 wt% or less.

The slurry composition for a negative electrode of the present invention may be produced by mixing the aforementioned negative electrode active material, binder, water-soluble polymer and water, and, if necessary, other components for use. Examples of the mixing method may include, but not particularly limited to, methods using a stirring type mixer, a shaking type mixer, or a rotation type mixer. Additional examples thereof may include methods using a dispersion kneader such as a homogenizer, a ball mill, a sand mill, a roll mill, a planetary mixer, or a planetary kneader.

The negative electrode of the present invention may be produced by applying the slurry composition for a negative electrode of the present invention onto a surface of a current collector and drying the slurry to form a negative electrode active material layer on the surface of the current collector.

The method for applying the slurry composition for a negative electrode of the present invention onto the surface of a current collector is not particularly limited. Examples thereof may include a doctor blade method, a dipping method, a reverse roll method, a direct roll method, a gravure method, an extrusion method, and a brush application method.

Examples of the drying method may include drying by warm air, hot air, or low humid air, vacuum drying, and drying methods by irradiation with (far) infrared radiation or electron beam. The drying time is usually 5 minutes to 30 minutes, and the drying temperature is usually 40°C to 180°C.

It is preferable that, after the application of the slurry composition for a negative electrode onto the surface of the collector and drying of the slurry, the negative electrode active material layer is subjected to pressurizing treatment using, e.g., die press or roll press, if necessary. The pressurizing treatment can decrease the porosity of the negative electrode active material layer. The porosity is preferably 5% or higher and more preferably 7% or higher and is preferably 30% or lower and more preferably 20% or lower. When the porosity is set to be equal to or higher than the lower limit of the aforementioned range, a high volume capacity can be easily obtained, and the negative electrode active material layer becomes less likely to be separated from the current collector. When the porosity is set to be equal to or lower than the upper limit, high charging efficiency and high discharging efficiency can be obtained.

When the negative electrode active material layer contains a curable polymer, it is preferable that the polymer is cured after the formation of the negative electrode active material layer.

### [3. Secondary battery]

The secondary battery of the present invention includes the negative electrode of the present invention. Usually, the secondary battery of the present invention includes a positive electrode, a negative electrode, an electrolytic solution, and a separator, and the negative electrode is the negative electrode of the present invention.
Since the secondary battery of the present invention includes the negative electrode of the present invention, swelling of the negative electrode upon charging and discharging can be suppressed, and reduction in capacity after storage in a high-temperature environment is less likely to occur. In addition, usually, the high-temperature cycle property and low-temperature output property of the secondary battery of the present invention can be improved, and the adhesion property of the negative electrode active material layer to the current collector can also be improved.

### [3-1. Positive electrode]

The positive electrode usually includes a current collector and a positive electrode active material layer that is formed on the surface of the current collector and contains a positive electrode active material and a binder for a positive electrode.

The current collector of the positive electrode is not particularly limited as long as it is formed from a material having electroconductivity and electrochemical durability. As the current collector of the positive electrode, current collectors used for the negative electrode of the present invention may be used. In particular, aluminum is particularly preferable.

When the secondary battery of the present invention is, e.g., a lithium ion secondary battery, a material that can be intercalated and deintercalated with lithium ions is used as the positive electrode active material. Such positive electrode active materials are classified into materials formed of an inorganic compound and materials formed of an organic compound.

Examples of the positive electrode active material formed of an inorganic compound may include transition metal oxides, transition metal sulfides, and lithium-containing complex metal oxides of lithium and transition metal.
Examples of the transition metals may include Ti, V, Cr, Mn, Fe, Co, Ni, Cu, and Mo.

Examples of the transition metal oxides may include MnO, MnO₂, V₂O₅, V₆O₁₃, TiO₂, Cu₂V₂O₃, amorphous V₂OP₂O_{5,} MoO₃, V₂O₅, and V₆O₁₃. Among them, MnO, V₂O₅, V₆O₁₃, and TiO₂ are preferable in terms of cycle stability and a capacity.
Examples of the transition metal sulfides may include TiS₂, TiS₃, amorphous MoS₂, and FeS.

Examples of the lithium-containing complex metal oxides may include a lithium-containing complex metal oxide having a layered structure, a lithium-containing complex metal oxide having a spinel structure, and a lithium-containing complex metal oxide having an olivine-type structure.
Examples of the lithium-containing complex metal oxides having a layered structure may include a lithium-containing cobalt oxide (LiCoO₂), a lithium-containing nickel oxide (LiNiO₂), a Co-Ni-Mn lithium complex oxide, a Ni-Mn-Al lithium complex oxide, and a Ni-Co-Al lithium complex oxide.
Examples of the lithium-containing complex metal oxides having a spinel structure may include lithium manganate (LiMn₂O₄) and Li[Mn_{3/2}M_{1/2}O₄ obtained by substituting part of Mn with another transition metal (wherein M is Cr, Fe, Co, Ni, Cu, etc.).
Examples of the lithium-containing complex metal oxides having an olivine-type structure may include an olivine-type lithium phosphate compound represented by LiₓMPO₄ (wherein M represents at least one selected from the group consisting of Mn, Fe, Co, Ni, Cu, Mg, Zn, V, Ca, Sr, Ba, Ti, Al, Si, B, and Mo, and X represents a number satisfying 0 ≤ X ≤ 2).

Examples of the positive electrode active material formed of an organic compound may include electroconductive polymers such as polyacetylene and polyp-phenylene.

Further, a positive electrode active material formed of a composite material that is a combination of an inorganic compound and an organic compound may also be used. For example, an iron-containing oxide may be subjected to reduction-firing in the presence of a carbon source material to produce a composite material coated with a carbon material, and this composite material may be used as the positive electrode active material. An iron-containing oxide tends to have poor electroconductivity. However, it may be used as a high performance positive electrode active material by forming such a composite material.
Further, those obtained by partial element substitution of the aforementioned compound may also be used as a positive electrode active material. In addition, a mixture of the inorganic compound and the organic compound may also be used as the positive electrode active material.
As the positive electrode active material, one species thereof may be solely used, or two or more species thereof may be used in combination at any ratio.

The volume average particle diameter of the particles of the positive electrode active material is usually 1 µm or larger and preferably 2 µm or larger, and usually 50µm or smaller and preferably 30 µm or smaller. When the volume average particle diameter of the particles of the positive electrode active material is set to be within the aforementioned range, the amount of the binder used for preparing the positive electrode active material layer can be reduced, and a reduction in capacity of the secondary battery can be suppressed. For forming the positive electrode active material layer, a positive electrode slurry composition containing the positive electrode active material and the binder is usually prepared. The viscosity of the slurry composition for a positive electrode can be easily adjusted to a proper viscosity for facilitating application, and a uniform positive electrode can thereby be obtained.

The content of the positive electrode active material in the positive electrode active material layer is preferably 90 wt% or more and more preferably 95 wt% or more, and preferably 99.9 wt% or less and more preferably 99 wt% or less. When the content of the positive electrode active material is set within the aforementioned range, the secondary battery can have a high capacity, and the flexibility of the positive electrode and the bonding property of the positive electrode active material layer with the current collector can be enhanced.

As the binder for the positive electrode, a resin such as polyethylene, polytetrafluoroethylene (PTFE), polyvinylidene fluoride (PVDF), a tetrafluoroethylene-hexafluoropropylene copolymer (FEP), a polyacrylic acid derivative, and a polyacrylonitrile derivative; or a soft polymer such as an acryl soft polymer, a diene soft polymer, an olefin soft polymer, and a vinyl soft polymer may be used. As the binder, one species thereof may be solely used, or two or more species thereof may be used in combination at any ratio.

If necessary, the positive electrode active material layer may contain a component other than the positive electrode active material and the binder.
Examples thereof may include a viscosity modifier, a electroconducting agent, a reinforcement material, a leveling agent, and an electrolytic solution additive. One species of these components may be solely used, or two or more species thereof may be used in combination at any ratio.

The thickness of the positive electrode active material layer is usually 5 µm or more and preferably 10 µm or more, and usually 300 µm or less and preferably 250 µm or less. When the thickness of the positive electrode active material layer falls within the aforementioned range, high properties of both load property and energy density can be realized.

The positive electrode may be produced by, e.g., the same procedure as the aforementioned procedure for producing the negative electrode.

### [3-2. Electrolytic solution]

As the electrolytic solution, a solution prepared by dissolving a lithium salt serving as a supporting electrolyte in a non-aqueous solvent may be used. Examples of the lithium salt may include lithium salts such as LiPF₆, LiAsF₆, LiBF₄, LiSbF₆, LiAlCl₄, LiClO₄, CF₃SO₃Li, C₄F₉SO₃Li, CF₃COOLi, (CF₃CO)₂NLi, (CF₃SO₂)₂NLi, and (C₂F₅SO₂)NLi. In particular, LiPF6, LiClO4, and CF3SO3Li, which are highly soluble in a solvent and shows a high dissociation degree is suitably used. One species of them may be solely used, or two or more species thereof may be used in combination at any ratio.

The amount of the supporting electrolyte is usually 1 wt% or more and preferably 5 wt% or more, and usually 30 wt% or less and preferably 20 wt% or less, relative to the electrolytic solution. When the amount of the supporting electrolyte is too small or too large, the ion conductivity may possibly decrease, and the charging property and discharging property of the secondary battery may possibly decrease.

The solvent used for the electrolytic solution is not particularly limited as long as the supporting electrolyte can be dissolved therein. Examples of the solvent for use may include: alkyl carbonates such as dimethyl carbonate (DMC), ethylene carbonate (EC), diethyl carbonate (DEC), propylene carbonate (PC), butylene carbonate (BC), and methyl ethyl carbonate (MEC); esters such as y-butyrolactone and methyl formate; ethers such as 1,2-dimethoxyethane and tetrahydrofuran; and sulfur-containing compounds such as sulfolane and dimethyl sulfoxide. Particularly, dimethyl carbonate, ethylene carbonate, propylene carbonate, diethyl carbonate, and methyl ethyl carbonate are preferable because of its tendency to give high ion conductivity and its wide range of usable temperature. As the solvent, one species thereof may be solely used, or two or more species thereof may be used in combination at any ratio.

If necessary, the electrolytic solution may further contain an additive. As the additive, a carbonate compound such as vinylene carbonate (VC) is preferable. As the additive, one species thereof may be solely used, or two or more species thereof may be used in combination at any ratio.

Examples of electrolytic solution other than the aforementioned electrolytic solutions may include: a gelled polymeric electrolyte obtained by impregnating a polymeric electrolyte such as polyethylene oxide and polyacrylonitrile with an electrolytic solution; and an inorganic solid electrolyte such as lithium sulfide, LiI, and Li₃N.

### [3-3. Separator]

As the separator, a porous substrate having pore portions is usually used. Examples of the separator may include (a) a porous separator having pore portions, (b) a porous separator having a polymer coating layer formed on its one side or both sides, and (c) a porous separator having formed thereon a resin coating layer including inorganic ceramic powders. Examples thereof may include: polypropylene-based, polyethylene-based, polyolefin-based, and aramid-based porous separators; polymer films for a solid polymer electrolyte or a gel polymer electrolyte that are made of polyvinylidene fluoride, polyethylene oxide, polyacrylonitrile, or a polyvinylidene fluoride hexafluoropropylene copolymer; a separator coated with a gelled polymer coating layer; and a separator coated with a porous membrane layer formed of an inorganic filler and a dispersing agent for the inorganic filler.

### [3-4. Method for producing secondary battery]

The method for producing the secondary battery of the present invention is not particularly limited. For example, the negative electrode and positive electrode are stacked with the separator interposed therebetween, and the resulting article is then wound or folded in conformity with the shape of the battery and then put in a battery container. Subsequently, the electrolytic solution is poured into the battery container, and the container is sealed. If necessary, expanded metal; an over-current protective element such as a fuse and a PTC element; and a lead plate may be put into the container to prevent an increase in the pressure inside the battery, and to prevent overcharging and overdischarging. The shape of the battery may be any of a laminated cell shape, a coin shape, a button shape, a sheet shape, a cylindrical shape, a rectangular shape, and a flat shape.

### Examples

The present invention will be specifically described hereinbelow by way of Examples. However, the present invention is not limited to the following Examples and may be implemented with any modifications without departing from the scope of the claims and equivalents thereto. In the following description for the Examples, "part" and "%" representing an amount are based on weight, unless otherwise specified. Unless otherwise specified, abbreviation "MAA" represents methacrylic acid, and abbreviation "AA" represents acrylic acid. The operations that will be described hereinbelow were performed under the conditions of room temperature and normal pressure, unless otherwise specified..

### [Evaluation methods]

### 1. Adhesion strength

Each of negative electrodes produced in Examples and Comparative Examples was cut into a rectangular shape of 100 mm long and 10 mm wide to prepare a test piece. The surface of the negative electrode active material layer of the test piece was affixed to cellophane tape with the surface of the negative electrode active material layer facing downward. As the cellophane tape, the one defined in JIS Z1522 was used. The cellophane tape was secured to a test table in advance. Then one end of the current collector was pulled vertically upward at a pulling rate of 50 mm/min to peel it, and stress at this time was measured. This measurement was repeated three times, and the average of the measurement results was calculated. This average value was taken as peel strength. Larger peel strength is indicative of strong binding strength of the negative electrode active material layer to the current collector, i.e., great adhesion strength.

### 2. Application capability

Each of the slurry compositions for a negative electrode produced in the Examples and Comparative Examples was applied onto a 20 µm-thick copper foil as a current collector so that the film thickness after drying was about 150 µm, and then dried. The drying was performed by conveying the copper foil through an oven at 60 °C at a rate of 0.5 m/min over 2 minutes. Then heat treatment was performed at 120°C for 2 minutes to obtain a negative electrode. The negative electrode thus obtained was cut into a size of 10 × 10 cm, and the number of pinholes having a diameter of 0.1 mm or larger was visually measured. Small number of pinholes is indicative of better application capability.

### 3. Durability

### (1) High-temperature storage property

Each of laminated-type cell lithium ion secondary batteries produced in the Examples and Comparative Examples was left stand for 24 hours. Then a charging-discharging operation was performed at 4.2 V and a charging-discharging rate of 0.1 C to measure an initial capacity C₀. Then the battery was charged to 4.2 V and stored at 60°C for 7 days. Then a charging-discharging operation was performed at 4.2 V and a charging-discharging rate of 0.1 C to measure a capacity C₁ after storage at high temperature. The high temperature storage property were evaluated using a capacity change rate ΔC_{S} represented by ΔC_{S} = C₁/C₀ × 100 (%). High value of the capacity change rate ΔC_{S} is indicative of high high-temperature storage property.

### (2) High-temperature cycle property

Each of the laminated-type cell lithium ion secondary batteries produced in the Examples and Comparative Examples was left stand for 24 hours. Then a charging-discharging operation was performed at 4.2 V and a charging-discharging rate of 0.1 C to measure an initial capacity C₀. Then charging-discharging was repeated in an environment at 60°C, and a capacity C₂ after 100 cycles was measured. The high temperature cycle property was evaluated using a capacity change rate ΔC_{C} represented by ΔC_{C} = C₂/C₀ × 100(%). High value of the capacity change rate ΔC_{C} is indicative of high high-temperature cycle property.

### (3) Electrode plate swelling property

After the evaluation of the aforementioned "(1) High-temperature storage property", the cell of the lithium ion secondary battery was disassembled, and the thickness d1 of the electrode plate of the negative electrode was measured. The thickness of the electrode plate of the negative electrode before the production of the cell of the lithium ion secondary battery was defined as d0, and the swelling ratio of the electrode plate of the negative electrode (d1 - d0)/d0 was calculated. Low value of this ratio is indicative of high swelling property of the electrode plate.

### 4. Low-temperature output property

Each of the laminated-type cell lithium ion secondary batteries produced in the Examples and Comparative Examples was left stand for 24 hours, and a charging-discharging operation was performed at 4.2 V and a charging-discharging rate of 0.1 C. Then a charging-discharging operation was performed in an environment at -25°C, and a voltage V₁₀ 10 seconds after the onset of discharging was measured. The low-temperature output property was evaluated using a voltage change ΔV represented by ΔV = 4.2 V - V₁₀. Low value of the voltage change ΔV is indicative of high low-temperature output property.

### 5. Viscosity of 1% aqueous water-soluble polymer solution

With each of water-soluble polymers produced in the Examples and Comparative Examples, 10% ammonia water, and ion-exchanged water, a 1% aqueous water-soluble polymer solution was prepared. The viscosity of the aqueous solution thus prepared was measured using a B-type viscometer.

### [Example 1]

### (Production of water-soluble polymer)

In a 5 MPa pressure-resistant container equipped with a stirrer, 67.5 parts of ethyl acrylate as the (meth)acrylic acid ester monomer, 30 parts of methacrylic acid as the ethylenically unsaturated carboxylic acid monomer, 2.5 parts of trifluoromethyl methacrylate as the fluorine-containing (meth)acrylic acid ester monomer, 1.0 part of sodium dodecylbenzenesulfonate as an emulsifier, 150 parts of ion-exchanged water, and 0.5 parts of potassium persulfate as a polymerization initiator were placed and sufficiently stirred. Then the mixture was warmed to 60°C to initiate polymerization. When the polymerization conversion ratio reached 96%, the mixture was cooled to terminate the reaction, whereby an aqueous solution containing a water-soluble polymer was obtained. To the aqueous solution containing the water-soluble polymer thus obtained, 10% ammonia water was added for adjusting the pH to 8, whereby an aqueous solution containing the desired water-soluble polymer was obtained. The weight average molecular weight of the water-soluble polymer thus obtained was measured and found to be 128,000.
Using the aqueous solution containing the water-soluble polymer thus obtained, a 1% aqueous water-soluble polymer solution was prepared in the aforementioned manner, and the viscosity of the aqueous solution thus prepared was measured. The results are shown in Table 1.

### (Production of binder)

In a 5 MPa pressure-resistant container equipped with a stirrer, 33 parts of 1,3-butadiene as the aliphatic conjugated diene monomer, 1.5 parts of methacrylic acid as the ethylenically unsaturated carboxylic acid monomer, 65.5 parts of styrene as the aromatic vinyl monomer, 4 parts of sodium dodecylbenzenesulfonate as an emulsifier, 150 parts of ion-exchanged water, and 0.5 parts of potassium persulfate as a polymerization initiator were placed and sufficiently stirred. Then the mixture was warmed to 50°C to initiate polymerization. When the polymerization conversion ratio reached 96%, the mixture was cooled to terminate the reaction, whereby an aqueous dispersion containing a binder composed of styrene-butadiene rubber (appropriately referred to hereinbelow as "SBR"). To the aqueous dispersion containing the binder thus obtained, a 5% aqueous sodium hydroxide solution was added for adjusting its pH to 8, and then unreacted monomers were removed by distillation under heating and reduced pressure. Then the resultant mixture was cooled to 30°C or lower to thereby obtain an aqueous dispersion containing the desired binder. The weight average molecular weight of the binder thus obtained was measured and found to be 1,500,000.

### (Production of slurry composition for a negative electrode)

The aforementioned aqueous solution containing the water-soluble polymer was diluted with water to adjust the concentration to 5%.
In a planetary mixer equipped with a disper, 50 parts of SiOC (volume average particle diameter: 12 µm) as the negative electrode active material, 50 parts of artificial graphite (volume average particle diameter: 24.5 µm) having a specific surface area of 4 m²/g, and 1 part in terms of solids of the aforementioned 5% aqueous water-soluble polymer solution were placed. The concentration of the solids was adjusted to 55% with ion-exchanged water, and then mixing was performed at 25°C for 60 minutes. Then the concentration of the solids was adjusted to 52% with ion-exchanged water, and mixing was further performed at 25°C for 15 minutes to thereby obtain a solution mixture.

To the aforementioned solution mixture, 1 part in terms of solids of the aforementioned aqueous dispersion containing the binder and ion-exchanged water were added for adjusting the final concentration of the solids to 42%, and mixing was further performed for 10 minutes. The resultant mixture was subjected to defoaming under reduced pressure to thereby obtain a slurry composition for a negative electrode having high flowability.
The application capability of the slurry composition for a negative electrode thus obtained were evaluated in the aforementioned manner. The results are shown in Table 1.

### (Production of negative electrode)

The aforementioned slurry composition for a negative electrode was applied onto a 20 µm-thick copper foil as a current collector using a comma coater so that the film thickness after drying was about 150 µm, and then dried. The drying was performed by conveying the copper foil through an oven at 60°C at a rate of 0.5 m/min over 2 minutes. Then heat treatment was performed at 120°C for 2 minutes to thereby obtain a raw material for a negative electrode. The raw material for a negative electrode was rolled using a roll press to obtain a negative electrode with a negative electrode active material layer having a thickness of 80 µm.
The adhesion strength of the obtained negative electrode was evaluated in the aforementioned manner. The results are shown in Table 1.

### (Production of positive electrode)

A water dispersion containing 40% of an acrylate polymer having a glass transition temperature Tg of -40°C and a number average particle diameter of 0.20 µm was prepared as a binder for a positive electrode. The aforementioned acrylate polymer was a copolymer obtained by emulsion polymerization of a monomer mixture containing 78 wt% of 2-ethylhexyl acrylate, 20 wt% of acrylonitrile, and 2 wt% of methacrylic acid.

100 parts of LiFePO₄ having a volume average particle diameter of 0.5 µm and an olivine crystal structure and as the positive electrode active material, 1 part in terms of solids of a 1% aqueous carboxymethyl cellulose solution ("BSH-12", manufactured by DAI-ICHI KOGYO SEIYAKU Co., Ltd.) as a dispersing agent, and 5 parts in terms of solids of the aforementioned water dispersion containing 40% of the acrylate polymer and as the binder were mixed. Then ion-exchanged water was added thereto such that the total concentration of solids was 40%, and the components were mixed using a planetary mixer to thereby prepare a slurry composition for a positive electrode.

The aforementioned slurry composition for a positive electrode was applied onto a 20 µm-thick copper foil as a current collector using a comma coater so that the film thickness after drying was about 200 µm, and then dried. The drying was performed by conveying the copper foil through an oven at 60°C at a rate of 0.5 m/min over 2 minutes. Then heat treatment was performed at 120°C for 2 minutes to thereby obtain a positive electrode.

### (Preparation of separator)

A single-layer polypropylene separator (width: 65 mm, length: 500 mm, thickness: 25 µm, produced by dry method, porosity: 55%) was cut into a disc shape with a diameter of 18 mm.

### (Lithium ion secondary battery)

An aluminum exterior package was prepared as the exterior of the battery. The aforementioned positive electrode was disposed such that the surface of the current collector was in contact with the aluminum exterior package. The separator was disposed on the surface of the positive electrode active material layer of the positive electrode. Then the aforementioned negative electrode was disposed on the separator such that the surface of the negative electrode active material layer faced the separator. An electrolytic solution (solvent: EC/DEC = 1/2, electrolyte: LiPF₆ with a concentration of 1 M) was poured such that air did not remain therein. For sealing the opening of the aluminum package, heat sealing was performed at 150°C to close the aluminum exterior, whereby a lithium ion secondary battery was produced.
For the battery thus obtained, durability was evaluated as to its high-temperature storage property, high-temperature cycle property, and swelling property of the electrode plate in the aforementioned manner. Further, low-temperature output property was also evaluated. The results are shown in Table 1. The capacity of the obtained lithium ion secondary battery when it was first charged and discharged at 4.2 V and a charging-discharging rate of 0.1 C (initial capacity) was 50 mAh.

### [Example 2]

In a 5 MPa pressure-resistant container equipped with a stirrer, 33 parts of 1,3-butadiene as the aliphatic conjugated diene monomer, 1.5 parts of methacrylic acid as the ethylenically unsaturated carboxylic acid monomer, 65.5 parts of acrylonitrile, 4 parts of sodium dodecylbenzenesulfonate as an emulsifier, 150 parts of ion-exchanged water, and 0.5 parts of potassium persulfate as a polymerization initiator were placed and sufficiently stirred. Then the mixture was warmed to 50°C to initiate polymerization. When the polymerization conversion rate reached 96%, the mixture was cooled to terminate the reaction, whereby an aqueous dispersion containing a binder composed of nitrile-butadiene rubber (appropriately referred to hereinbelow as "NBR") was obtained. The weight average molecular weight of the binder thus obtained was measured and found to be 1,380,000.

Production of a lithium ion secondary battery and evaluation on each evaluation item were performed in the same manner as in Example 1 except that, in the production of the slurry composition for the negative electrode, the aforementioned aqueous dispersion containing the binder composed of NBR was used in place of the aqueous dispersion containing the binder used in Example 1. The results are shown in Table 1.

### [Example 3]

In a 5 MPa pressure-resistant container equipped with a stirrer, 76 parts of 2-ethylhexyl acrylate as the acrylic ester, 4 parts of methacrylic acid as the ethylenically unsaturated carboxylic acid monomer, 20 parts of acrylonitrile, 4 parts of sodium dodecylbenzenesulfonate as an emulsifier, 150 parts of ion-exchanged water, and 0.5 parts of potassium persulfate as a polymerization initiator were placed and sufficiently stirred. Then the mixture was warmed to 50°C to initiate polymerization. When the polymerization conversion rate reached 96%, the mixture was cooled to terminate the reaction, whereby an aqueous dispersion containing a binder composed of acrylic rubber (appropriately referred to hereinbelow as "ACR") was obtained. The weight average molecular weight of the binder thus obtained was measured and found to be 1,280,000.

Production of a lithium ion secondary battery and evaluation on each evaluation item were performed in the same manner as in Example 1 except that, in the production of the slurry composition for the negative electrode, the aforementioned aqueous dispersion containing the binder composed of ACR was used in place of the aqueous dispersion containing the binder used in Example 1. The results are shown in Table 1.

### [Example 4]

Production of a lithium ion secondary battery and evaluation on each evaluation item were performed in the same manner as in Example 1 except that, in the production of the water-soluble polymer, the amount of methacrylic acid as the ethylenically unsaturated carboxylic acid monomer was changed to 20 parts and the amount of ethyl acrylate as the (meth)acrylic acid ester monomer was changed to 77.5 parts. The results are shown in Table 1.

### [Example 5]

Production of a lithium ion secondary battery and evaluation on each evaluation item were performed in the same manner as in Example 1 except that, in the production of the water-soluble polymer, the amount of methacrylic acid as the ethylenically unsaturated carboxylic acid monomer was changed to 25 parts and the amount of ethyl acrylate as the (meth)acrylic acid ester monomer was changed to 72.5 parts. The results are shown in Table 1.

### [Example 6]

Production of a lithium ion secondary battery and evaluation on each evaluation item were performed in the same manner as in Example 1 except that, in the production of the water-soluble polymer, the amount of methacrylic acid as the ethylenically unsaturated carboxylic acid monomer was changed to 40 parts and the amount of ethyl acrylate as the (meth)acrylic acid ester monomer was changed to 57.5 parts. The results are shown in Table 2.

### [Example 7]

Production of a lithium ion secondary battery and evaluation on each evaluation item were performed in the same manner as in Example 1 except that, in the production of the water-soluble polymer, the amount of methacrylic acid as the ethylenically unsaturated carboxylic acid monomer was changed to 45 parts and the amount of ethyl acrylate as the (meth)acrylic acid ester monomer was changed to 52.5 parts. The results are shown in Table 2.

### [Example 8]

Production of a lithium ion secondary battery and evaluation on each evaluation item were performed in the same manner as in Example 1 except that, in the production of the water-soluble polymer, the amount of ethyl acrylate as the (meth)acrylic acid ester monomer was changed to 69 parts and the amount of trifluoromethyl methacrylate as the fluorine-containing (meth)acrylic acid ester monomer was changed to 1 part. The results are shown in Table 2.

### [Example 9]

Production of a lithium ion secondary battery and evaluation on each evaluation item were performed in the same manner as in Example 1 except that, in the production of the water-soluble polymer, the amount of ethyl acrylate as the (meth)acrylic acid ester monomer was changed to 65 parts and the amount of trifluoromethyl methacrylate as the fluorine-containing (meth)acrylic acid ester monomer was changed to 5 parts. The results are shown in Table 2.

### [Example 10]

Production of a lithium ion secondary battery and evaluation on each evaluation item were performed in the same manner as in Example 1 except that, in the production of the water-soluble polymer, the amount of ethyl acrylate as the (meth)acrylic acid ester monomer was changed to 61 parts and the amount of trifluoromethyl methacrylate as the fluorine-containing (meth)acrylic acid ester monomer was changed to 9 parts. The results are shown in Table 2.

### [Example 11]

Production of a lithium ion secondary battery and evaluation on each evaluation item were performed in the same manner as in Example 1 except that, in the production of the water-soluble polymer, trifluoromethyl acrylate was used as the fluorine-containing (meth)acrylic acid ester monomer in place of trifluoromethyl methacrylate. The results are shown in Table 3.

### [Example 12]

Production of a lithium ion secondary battery and evaluation on each evaluation item were performed in the same manner as in Example 1 except that, in the production of the water-soluble polymer, perfluorooctyl methacrylate was used as the fluorine-containing (meth)acrylic acid ester monomer in place of trifluoromethyl methacrylate. The results are shown in Table 3.

### [Example 13]

Production of a lithium ion secondary battery and evaluation on each evaluation item were performed in the same manner as in Example 1 except that, in the production of the slurry composition for a negative electrode, the amount of the aqueous water-soluble polymer solution in terms of solids was changed to 0.7 parts. The results are shown in Table 3.

### [Example 14]

Production of a lithium ion secondary battery and evaluation on each evaluation item were performed in the same manner as in Example 1 except that, in the production of the slurry composition for a negative electrode, the amount of the aqueous water-soluble polymer solution in terms of solids was changed to 0.5 parts. The results are shown in Table 3.

### [Example 15]

Production of a lithium ion secondary battery and evaluation on each evaluation item were performed in the same manner as in Example 1 except that, in the production of the slurry composition for a negative electrode, artificial graphite was not used as the negative electrode active material but 100 parts of SiOC was used instead. The results are shown in Table 3. The capacity of the lithium ion secondary battery when it was first charged and discharged at 4.2 V and a charging-discharging rate of 0.1 C (initial capacity) was 70 mAh.

### [Example 16]

Production of a lithium ion secondary battery and evaluation on each evaluation item were performed in the same manner as in Example 1 except that, in the production of the slurry composition for a negative electrode, SiOC was not used as the negative electrode active material but 100 parts of artificial graphite was used instead. The results are shown in Table 4. The capacity of the lithium ion secondary battery when it was first charged and discharged at 4.2 V and a charging-discharging rate of 0.1 C (initial capacity) was 34.8 mAh.

### [Example 17]

Production of a lithium ion secondary battery and evaluation on each evaluation item were performed in the same manner as in Example 1 except that, in the production of the slurry composition for a negative electrode, 20 parts of SiOC and 80 parts of artificial graphite were used as the negative electrode active material. The results are shown in Table 4.

### [Example 18]

Production of a lithium ion secondary battery and evaluation on each evaluation item were performed in the same manner as in Example 1 except that, in the production of the water-soluble polymer, acrylic acid was used as the ethylenically unsaturated carboxylic acid monomer in place of methacrylic acid. The results are shown in Table 4.

### [Example 19]

Production of a lithium ion secondary battery and evaluation on each evaluation item were performed in the same manner as in Example 1 except that, in the production of the slurry composition for a negative electrode, addition of a combination of 0.5 parts in terms of solids of the aqueous water-soluble polymer solution and 0.5 parts of carboxymethyl cellulose that is a cellulose-based thickener was performed in place of addition of 1 part in terms of solids of the aqueous water-soluble polymer solution. The results are shown in Table 4.

### [Comparative Example 1]

Production of a lithium ion secondary battery and evaluation on each evaluation item were performed in the same manner as in Example 1 except that, in the production of the slurry composition for a negative electrode, addition of 1 part of carboxymethyl cellulose was performed in place of addition of 1 part in terms of solids of the aqueous water-soluble polymer solution. The results are shown in Table 5.

### [Comparative Example 2]

Production of a lithium ion secondary battery and evaluation on each evaluation item were performed in the same manner as in Example 1 except that, in the production of the water-soluble polymer, the amount of ethyl acrylate as the (meth)acrylic acid ester monomer was changed to 70 parts and trifluoromethyl methacrylate as the fluorine-containing (meth)acrylic acid ester monomer was not used. The results are shown in Table 5.

### [Comparative Example 3]

Production of a lithium ion secondary battery and evaluation on each evaluation item were performed in the same manner as in Example 1 except that, in the production of the water-soluble polymer, the amount of methacrylic acid as the ethylenically unsaturated carboxylic acid monomer was changed to 10 parts and the amount of ethyl acrylate as the (meth)acrylic acid ester monomer was changed to 87.5 parts. The results are shown in Table 5.

### [Comparative Example 4]

Production of a lithium ion secondary battery and evaluation on each evaluation item were performed in the same manner as in Example 1 except that, in the production of the water-soluble polymer, the amount of methacrylic acid as the ethylenically unsaturated carboxylic acid monomer was changed to 60 parts and the amount of ethyl acrylate as the (meth)acrylic acid ester monomer was changed to 37.5 parts. The results are shown in Table 5.

### [Comparative Example 5]

Production of a lithium ion secondary battery and evaluation on each evaluation item were performed in the same manner as in Example 1 except that, in the production of the slurry composition for a negative electrode, SiOC was not used as the negative electrode active material but 100 parts of artificial graphite was used instead, and addition of 1 part of carboxymethyl cellulose was performed in place of addition of 1 part in terms of solids of the aqueous water-soluble polymer solution. The results are shown in Table 5.

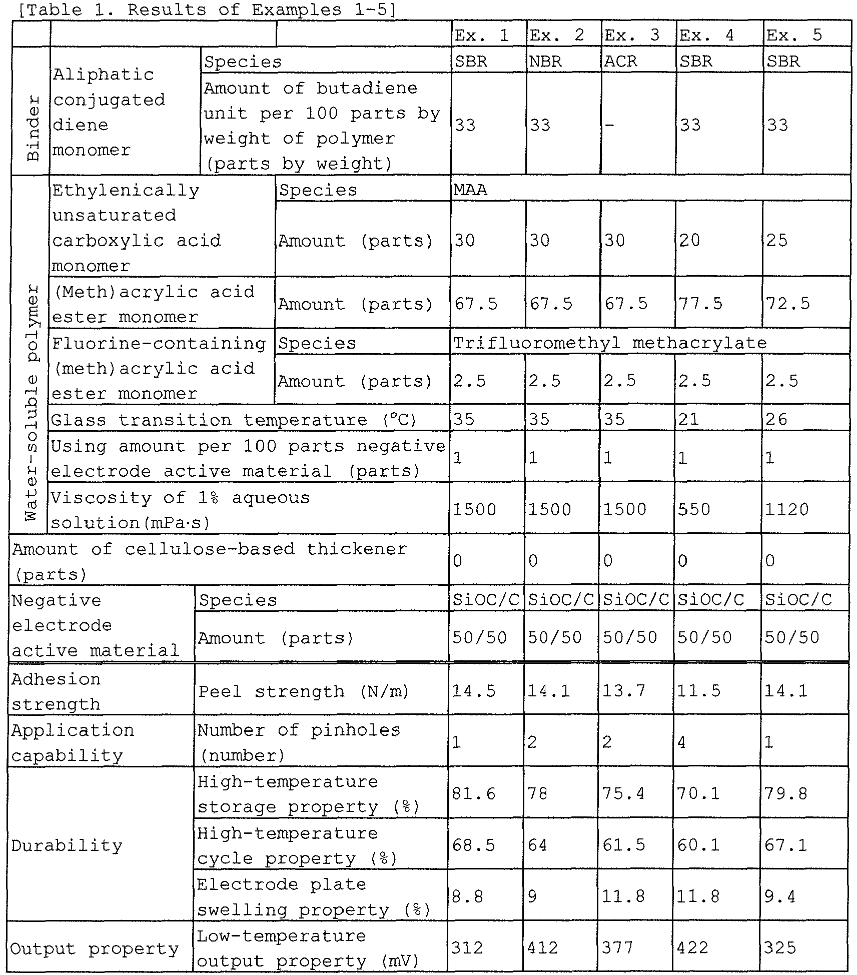

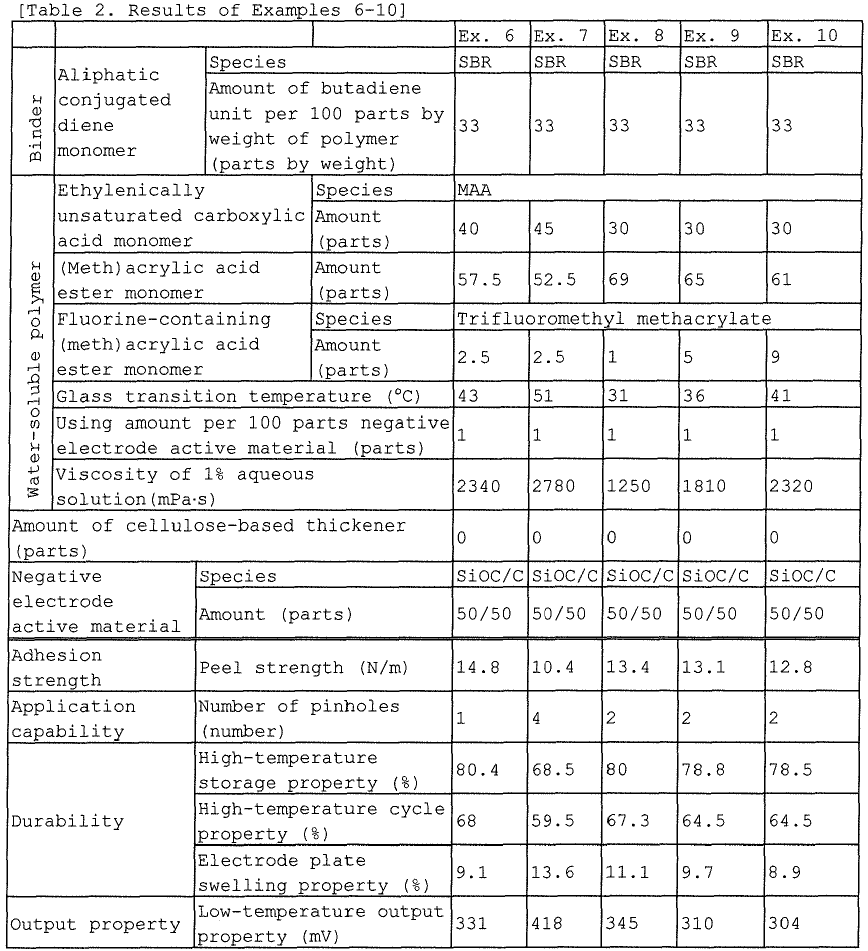

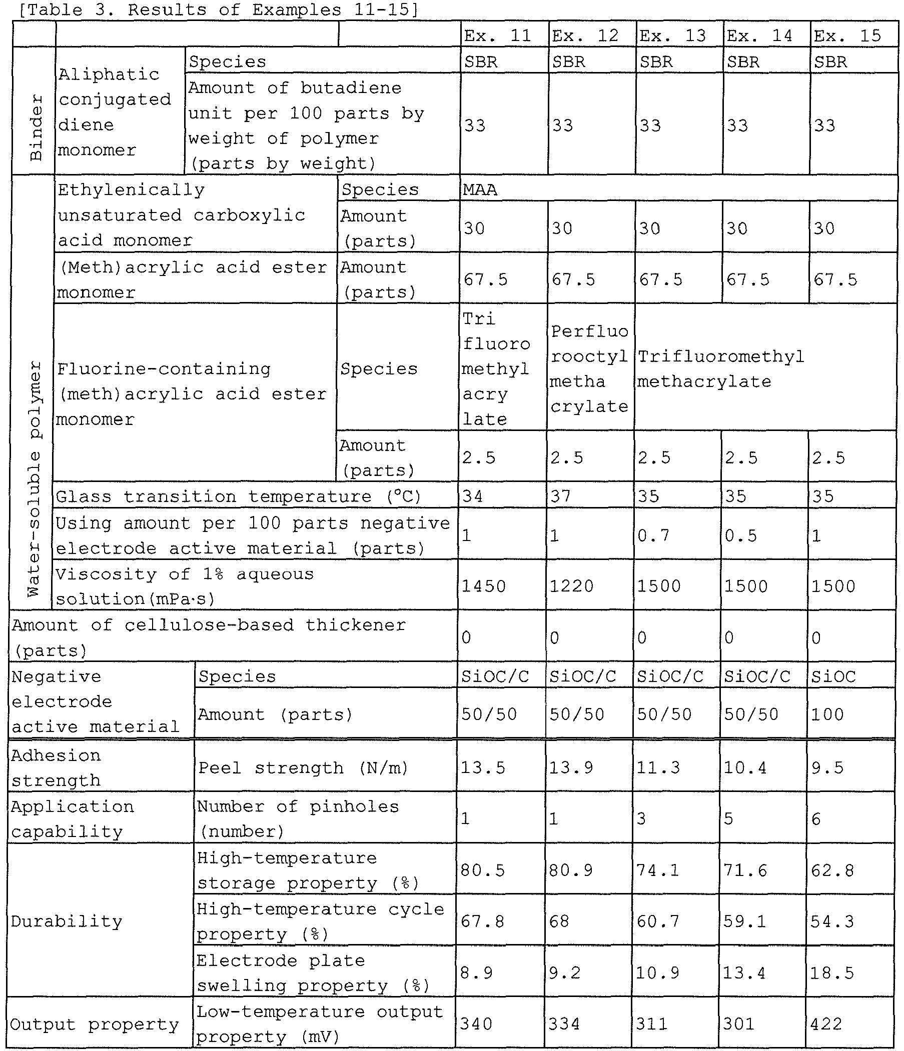

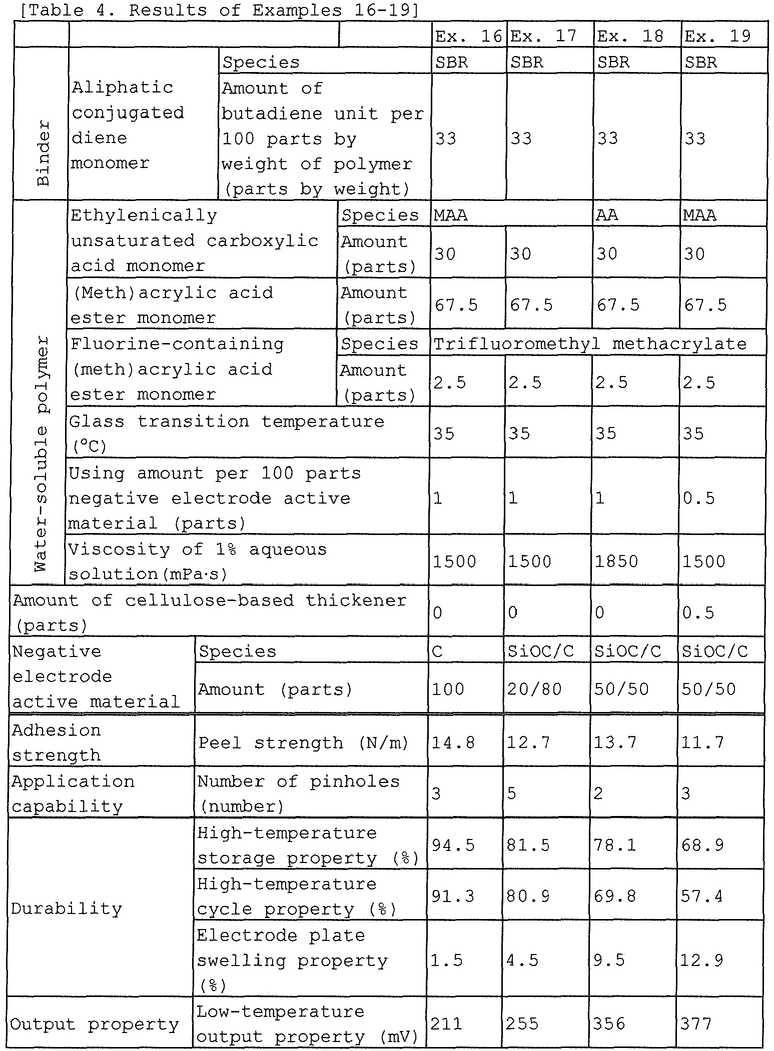

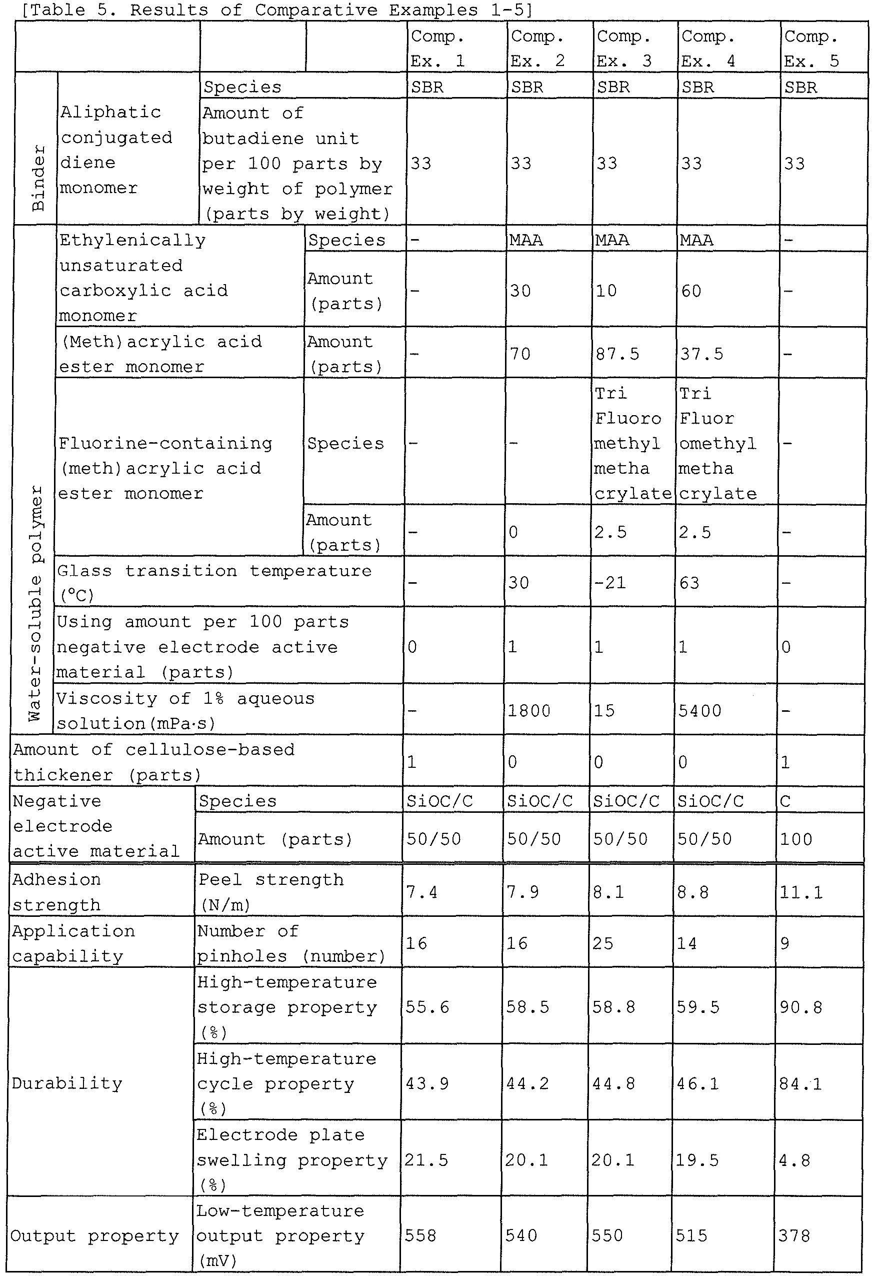

### [Discussion]

As can be seen from Tables 1 to 5, each Example realized a secondary battery in which swelling of the negative electrode upon charging and discharging can be suppressed, and the capacity is less likely to decrease even after storage in a high-temperature environment. Further, high-temperature cycle property can be improved. Thus a secondary battery having high durability was realized. In the secondary batteries that have been studied in prior art, a polymer containing fluorine was added to an electrode mainly for the purpose of improving adhesion property of the electrode active materials and improving rate property. In view of this fact, the aforementioned effects, i.e., the ability to suppress swelling and the ability to improve the high-temperature storage property and high-temperature cycle property, are different effects from those that have been studied in prior art.

In each Example, the peel strength is high, and therefore it can be seen that the adhesion property of the negative electrode active material layer to the current collector is high. In each Example, the number of pinholes formed is small, and therefore it can be seen that the application capability of the slurry composition for a negative electrode are good. In each Example, the low-temperature output property is high, and therefore it can be seen that the secondary battery having high-power was realized.
Accordingly, the secondary battery obtained in the present invention is a secondary battery having high practical performance.

## Claims

1. A negative electrode for a secondary battery, comprising a negative electrode active material, a binder, and a water-soluble polymer, wherein
the water-soluble polymer is a copolymer containing 15 wt% to 50 wt% of an ethylenically unsaturated carboxylic acid monomer unit, 30 wt% to 70 wt% of a (meth)acrylic acid ester monomer unit, and 0.5 wt% to 10 wt% of a fluorine-containing (meth)acrylic acid ester monomer unit.

2. The negative electrode for a secondary battery according to claim 1, wherein the negative electrode active material contains a metal, and the negative electrode active material is capable of storing and releasing lithium.

3. The negative electrode for a secondary battery according to claim 1 or 2, wherein the negative electrode active material is a compound containing Si.

4. The negative electrode for a secondary battery according to any one of claims 1 to 3, wherein the binder is a polymer containing an aliphatic conjugated diene monomer unit.

5. The negative electrode for a secondary battery according to any one of claims 1 to 4, wherein the binder is a polymer containing an aliphatic conjugated diene monomer unit and an aromatic vinyl monomer unit.

6. The negative electrode for a secondary battery according to any one of claims 1 to 5, wherein the ethylenically unsaturated carboxylic acid monomer in the water-soluble polymer is an ethylenically unsaturated monocarboxylic acid monomer.

7. The negative electrode for a secondary battery according to any one of claims 1 to 6, wherein a viscosity of a 1wt% aqueous solution of the water-soluble polymer is 0.1 mPa·s to 20,000 mPa·s.

8. A secondary battery comprising a positive electrode, a negative electrode, an electrolytic solution, and a separator, wherein
the negative electrode is the negative electrode for a secondary battery according to any one of claims 1 to 7.

9. A slurry composition for a negative electrode, comprising a negative electrode active material, a binder, a water-soluble polymer, and water, wherein
the water-soluble polymer is a copolymer containing 15 wt% to 50 wt% of an ethylenically unsaturated carboxylic acid monomer unit, 30 wt% to 70 wt% of a (meth)acrylic acid ester monomer unit, and 0.5 wt% to 10 wt% of a fluorine-containing (meth)acrylic acid ester monomer unit.

10. A method for producing a negative electrode for a secondary battery, the method comprising: applying the slurry composition for a negative electrode according to claim 9 onto a surface of a current collector; and drying the slurry composition.
